# EUROPEAN PATENT APPLICATION

(11) **EP 2 351 969 A1**
(43) Date of publication of application: **03.08.2011**
(21) Application number: 09812873.9
(22) Date of filing: 08.09.2009
(51) Int. Cl.: F24F 3/14, B01D 53/26

(54) **HUMIDITY CONTROL DEVICE**

(30) Priority: 10.09.2008 JP 2008232581
(71) Applicant: Daikin Industries, Ltd., Osaka-shi, Osaka 530-8323 (JP)
(72) Inventor: NODA, Hiroshi, Sakai-shi Osaka 591-8511 (JP); MATSUI, Nobuki, Sakai-shi Osaka 591-8511 (JP); OKA, Masahiro, Sakai-shi Osaka 591-8511 (JP)
(74) Representative: HOFFMANN EITLE
(86) International application number: PCT/JP2009/004444
(87) International publication number: WO 2010/029724

(57) **Abstract**

A humidity control apparatus includes a refrigerant circuit (50) which has a compressor (53), a main electric-operated expansion valve (55), and a first adsorption heat exchanger (51) and a second adsorption heat exchanger (52) on which adsorbent for adsorbing moisture in air is supported, and in which refrigerant reversibly circulates to perform a vapor compression refrigeration cycle. In the humidity control apparatus, refrigerant circulation in the refrigerant circuit (50) is reversibly switched to alternately perform an adsorption process and a recovery process with the adsorbent in the adsorption heat exchangers (51, 52), and the humidity of air passing through the absorption heat exchangers (51, 52) is adjusted. The refrigerant circuit (50) is provided on an upstream side of the adsorption heat exchanger (51, 52) in a recovery air flow, and includes an auxiliary heat exchanger (61) configured to preheat recovery air to be supplied to the adsorption heat exchanger (51, 52), and a refrigerant adjusting mechanism (62) configured to adjust an amount of refrigerant flowing into the auxiliary heat exchanger (61).

## Description

### TECHNICAL FIELD

The present invention relates to a humidity control apparatus, and particularly relates to a humidity control at a low external temperature.

### BACKGROUND ART

Conventionally, a humidity control apparatus has been known, in which the humidity of outdoor or room air is controlled, and the humidity-controlled air is supplied to a room. As the humidity control apparatus of this type, Patent Document 1 discloses a humidity control apparatus including adsorption heat exchangers on which adsorbent is supported.

The humidity control apparatus of Patent Document 1 includes a refrigerant circuit in which refrigerant circulates to perform a refrigeration cycle. In the refrigerant circuit, a compressor, a first adsorption heat exchanger, a second adsorption heat exchanger, an expansion valve, and a four-way switching valve are connected together. The compressor is provided in a predetermined accommodation chamber of a casing. In addition, the first and second adsorption heat exchangers are provided in first and second adsorption heat exchanger chambers inside the casing, respectively.

In the refrigerant circuit, a refrigerant circulation direction can be reversibly switched depending on settings of the four-way switching valve. Specifically, in the refrigerant circuit, the four-way switching valve is switched at predetermined time intervals. In such a manner, a process in which the first adsorption heat exchanger functions as a condenser, and the second adsorption heat exchanger functions as an evaporator, and a process in which the first adsorption heat exchanger functions as the evaporator, and the second adsorption heat exchanger functions as the condenser are alternately performed. In the adsorption heat exchanger serving as the evaporator, moisture in air is adsorbed to the adsorbent. In the adsorption heat exchanger serving as the condenser, moisture is desorbed from the adsorbent, and is imparted to air. As described above, in each of the adsorption heat exchangers, an adsorption process in which moisture is adsorbed, and a recovery process in which moisture is desorbed are alternately performed by switching the four-way switching valve.

In the humidity control apparatus, air passing through one of the adsorption heat exchangers is supplied to the room, and air passing through the other adsorption heat exchanger is discharged to outside the room. In such a manner, a dehumidification or humidification operation is performed. In, e.g., the dehumidification operation, air passing through the adsorption heat exchanger serving as the evaporator is supplied to the room. In the humidification operation, air passing through the adsorption heat exchanger serving as the condenser is supplied to the room.

However, when performing the humidification operation in the humidity control apparatus under environment in which an outdoor air temperature (external temperature) is low (e.g., 15°C below zero), a difference between the outdoor air temperature and a room air temperature is increased. Thus, a problem is caused, in which, when taking in outdoor air, condensation is caused on, e.g., a damper configured to switch between first and second processes.

In a humidity control apparatus of Patent Document 2, a total heat exchanger configured to exchange heat between outdoor air and room air is provided on an upstream side of the humidity control apparatus in an air flow considering the foregoing problem, and therefore preheated outdoor air is taken into the humidity control apparatus.

### CITATION LIST

### PATENT DOCUMENT

PATENT DOCUMENT 1: Japanese Patent Publication No. 2005-291532
PATENT DOCUMENT 2: Japanese Patent Publication No. 2006-170517

### SUMMARY OF THE INVENTION

### TECHNICAL PROBLEM

However, in the humidity control apparatus of Patent Document 2, heat is exchanged between outdoor air and room air, resulting in reduction in heat exchange efficiency between such air. Thus, it is necessary to increase a heat exchange capacity in order to sufficiently heat outdoor air under the environment in which the external temperature is 15°C below zero. This causes problems that an installation space of a large-sized heat exchanger is needed, and a manufacturing cost is increased.

In addition, in the humidity control apparatus of Patent Document 2, outdoor air is constantly heated by room air. Since outdoor air is forcibly heated even when the heating is not needed, a problem is caused, in which the unnecessary heating is performed.

The present invention has been made in view of the foregoing, and it is an objective of the present invention to efficiently preheat outdoor air taken into the humidity control apparatus under the low external temperature environment.

### SOLUTION TO THE PROBLEM

The present invention is configured so that, when processing low-temperature outdoor air, air to be supplied to an adsorption heat exchanger (51, 52) in which refrigerant circulation is controlled to perform a recovery process is preheated by refrigerant circulating through a refrigerant circuit.

A first aspect of the invention is intended for a humidity control apparatus which includes a refrigerant circuit (50) having a compressor (53), a main expansion mechanism (55), and a first adsorption heat exchanger (51) and a second adsorption heat exchanger (52) on which adsorbent for adsorbing moisture in air is supported and in which refrigerant reversibly circulates to perform a vapor compression refrigeration cycle, and is configured so that refrigerant circulation in the refrigerant circuit (50) is reversibly switched to alternately perform an adsorption process and a recovery process with the adsorbent in the adsorption heat exchanger (51, 52), and the humidity of air passing through the adsorption heat exchanger (51, 52) is adjusted. The humidity control apparatus of the first aspect of the invention includes an auxiliary heat exchanger (61) configured to preheat recovery air to be supplied to the adsorption heat exchanger (51, 52), which is provided in the refrigerant circuit (50), and is arranged on an upstream side of the adsorption heat exchanger (51, 52) in a recovery air flow; and a refrigerant adjusting mechanism (62) configured to adjust an amount of refrigerant flowing into the auxiliary heat exchanger (61), which is provided in the refrigerant circuit (50).

In the first aspect of the invention, the refrigerant circulation direction of the refrigerant circuit (50) is reversibly switched, thereby alternately performing the adsorption process and the recovery process with the adsorbent. Specifically, in the refrigerant circuit (50), a vapor compression refrigeration cycle in which the first adsorption heat exchanger (51) functions as a heat radiator (condenser), and the second adsorption heat exchanger (52) functions as an evaporator, and a vapor compression refrigeration cycle in which the first adsorption heat exchanger (51) functions as the evaporator, and the second adsorption heat exchanger (52) functions as the heat radiator (condenser) are alternately performed.

In the adsorption heat exchanger (51, 52) serving as the evaporator, low-pressure refrigerant is evaporated to cool the adsorbent of the adsorption heat exchanger (51, 52). In such a state, when air passes through the adsorption heat exchanger (51, 52), air contacts the adsorbent of the adsorption heat exchanger (51, 52), and moisture in the air is adhered to the adsorbent. That is, the adsorption process is performed with the adsorbent, thereby dehumidifying the air. A dehumidification operation is performed by supplying the dehumidified air to a room.

Meanwhile, in the adsorption heat exchanger (51, 52) serving as the heat radiator (condenser), high-pressure refrigerant is condensed to heat the adsorbent of the adsorption heat exchanger (51, 52). In such a state, when air passes through the adsorption heat exchanger (51, 52), moisture is desorbed from the adsorbent of the adsorption heat exchanger (51, 52), and is imparted to air. That is, the recovery process is performed with the adsorbent to humidify the air. A humidification operation is performed by supplying the humidified air to the room. Thus, in the humidity control apparatus, the refrigerant circulation direction is reversibly switched, and therefore the state in which the adsorption process in performed in the first adsorption heat exchanger (51), and the recovery process is performed in the second adsorption heat exchanger (52), and the state in which the recovery process is performed in the first adsorption heat exchanger (51), and the adsorption process is performed in the second adsorption heat exchanger (52) are alternately switched.

When the temperature of recovery air flowing into the adsorption heat exchanger (51, 52) is low, the refrigerant adjusting mechanism (62) allows refrigerant circulating through the refrigerant circuit (50) to flow into the auxiliary heat exchanger (61). In the auxiliary heat exchanger (61), heat is exchanged between the recovery air and the refrigerant, thereby heating the recovery air. The recovery air preheated in the auxiliary heat exchanger (61) passes through the adsorption heat exchanger (51, 52) serving as the heat radiator (condenser), thereby performing the recovery process.

A second aspect of the invention is intended for the humidity control apparatus of the first aspect of the invention, the refrigerant circuit (50) includes a main circuit (50a) having the compressor (53), the main expansion mechanism (55), and the adsorption heat exchangers (51, 52), and an auxiliary circuit (60) which is connected to the main circuit (50a), and into which high-pressure refrigerant flows. The auxiliary heat exchanger (61) is provided in the auxiliary circuit (60). The refrigerant adjusting mechanism (62) is switchable between a state in which an inflow of high-pressure refrigerant into the auxiliary circuit (60) is allowed, and a state in which the inflow of high-pressure refrigerant into the auxiliary circuit (60) is blocked.

In the second aspect of the invention, when the temperature of recovery air flowing into the adsorption heat exchanger (51, 52) is low, the refrigerant adjusting mechanism (62) switches the refrigerant circulation in the main circuit (50a), and allows high-pressure refrigerant to flow into the auxiliary circuit (60). The high-pressure refrigerant flowing through the auxiliary circuit (60) flows into the auxiliary heat exchanger (61) to exchange heat with the recovery air, and then heats the recovery air. The recovery air preheated in the auxiliary heat exchanger (61) passes through the adsorption heat exchanger (51, 52) serving as the heat radiator (condenser), thereby performing the recovery process.

A third aspect of the invention is intended for the humidity control apparatus of the second aspect of the invention, the auxiliary circuit (60) includes an expansion bypass line (64) configured to bypass the main expansion mechanism (55) of the main circuit (50a), and an auxiliary expansion mechanism (66) provided on a downstream side of the auxiliary heat exchanger (61) of the expansion bypass line (64) serves as the refrigerant adjusting mechanism (62).

In the third aspect of the invention, After passing through the adsorption heat exchanger (51, 52) in which the recovery process is performed, high-pressure refrigerant discharged from the compressor (53) of the refrigerant circuit (50) is expanded, and flows into the adsorption heat exchanger (51, 52) in which the adsorption process is performed.

When the temperature of recovery air flowing into the adsorption heat exchanger (51, 52) is low, the refrigerant adjusting mechanism (62) closes the main expansion mechanism (55) of the refrigerant circuit (50). Meanwhile, the auxiliary expansion mechanism (66) is opened, and therefore refrigerant flowing through the main circuit (50a) flows into the expansion bypass line (64) which is the auxiliary circuit (60). The refrigerant flowing through the expansion bypass line (64) flows into the auxiliary heat exchanger (61) to exchange heat with the recovery air, and heats the recovery air. Then, the refrigerant passing through the auxiliary heart exchanger (61) is expanded in the auxiliary expansion mechanism (66) on the downstream side of the auxiliary heat exchanger (61) of the expansion bypass line (64), and flows into the adsorption heat exchanger (51, 52) of the main circuit (50a), in which the adsorption process is performed. The recovery air preheated in the auxiliary heat exchanger (61) passes through the adsorption heat exchanger (51, 52) serving as the heat radiator (condenser), thereby performing the recovery process.

A fourth aspect of the invention is intended for the humidity control apparatus of the third aspect of the invention, which further includes a bridge circuit (110) configured so that refrigerant constantly flows in one direction, and provided in a liquid line (50b) of the main circuit (50a). The main expansion mechanism (55) is arranged in a one-way path (119) connecting between one middle point and the other middle point in the bridge circuit (110), and both ends of the expansion bypass line (64) are connected to the one-way path (119) of the bridge circuit (110) so as to bypass the main expansion mechanism (55).

In the fourth aspect of the invention, high-pressure refrigerant discharged from the compressor (53) of the refrigerant circuit (50) passes through the adsorption heat exchanger (51, 52) in which the recovery process is performed, and then flows into the bridge circuit (110). The refrigerant flowing through the one-way path (119) of the bridge circuit (110) is expanded in the main expansion mechanism (55), and then flows into the adsorption heat exchanger (51, 52) in which the adsorption process is performed.

When the temperature of recovery air flowing into the adsorption heat exchanger (51, 52) is low, the refrigerant adjusting mechanism (62) closes the main expansion mechanism (55) of the main circuit (50a). Meanwhile, the auxiliary expansion mechanism (66) is opened, therefore refrigerant flowing through the one-way path (119) of the bridge circuit (110) flows into the expansion bypass line (64). The refrigerant flowing through the expansion bypass line (64) exchanges heat with the recovery air in the auxiliary heat exchanger (61), and heats the recovery air. Then, after the refrigerant passing through the auxiliary heat exchanger (61) is expanded in the auxiliary expansion mechanism (66), the refrigerant returns to the main circuit (50a), and flows into the adsorption heat exchanger (51, 52) in which the adsorption process is performed. The recovery air preheated in the auxiliary heat exchanger (61) passes through the adsorption heat exchanger (51, 52) serving as the heat radiator (condenser), thereby performing the recovery process.

A fifth aspect of the invention is intended for the humidity control apparatus of the fourth aspect of the invention, in which pipes (111-114) including check valves (115-118) are connected together to form the bridge circuit (110), and the main circuit (50a) includes an auxiliary line (58) which connects an upstream side of the main expansion mechanism (55) of the one-way path (119) to the liquid line (50b) between the bridge circuit (110) and one of the absorption heat exchangers (51, 52), and which has a capillary tube (59).

In the fifth aspect of the invention, high-pressure refrigerant discharged from the compressor (53) of the refrigerant circuit (50) passes through the adsorption heat exchangers (51, 52) serving as the heat radiator (condenser), and is expanded in the main expansion mechanism (55). Then, the refrigerant passes through the adsorption heat exchangers (51, 52) serving as the evaporator. Liquid refrigerant accumulated between the upstream side of the main expansion mechanism (55) and a downstream side of the check valve (115, 117) in the one-way path (119) is returned to the liquid line (50b) of the adsorption heat exchangers (51, 52) of the main circuit (50a) through the capillary tube (59).

A sixth aspect of the invention is intended for the humidity control apparatus of the third aspect of the invention, in which the expansion bypass line (64) includes the bridge circuit (110) in which refrigerant constantly flows in one direction, the auxiliary heat exchanger (61) is arranged in the one-way path (119) connecting between the one middle point and the other middle point in the bridge circuit (110), and the auxiliary expansion valve (66) is arranged on the downstream side of the auxiliary heat exchanger (61) in the one-way path (119).

In the sixth aspect of the invention, high-pressure refrigerant discharged from the compressor (53) of the refrigerant circuit (50) passes through the adsorption heat exchangers (51, 52) in which the recovery process is performed, and is expanded in the main expansion mechanism (55). Then, the refrigerant flows into the adsorption heat exchangers (51, 52) in which the adsorption process is performed.

When the temperature of recovery air flowing into the adsorption heat exchangers (51, 52) is low, the refrigerant adjusting mechanism (62) closes the main expansion mechanism (55) of the main circuit (50a). Meanwhile, the auxiliary expansion mechanism (66) is opened, and therefore refrigerant flowing through the one-way path (119) flows into the expansion bypass line (64) which is the auxiliary circuit. The refrigerant flowing through the expansion bypass line (64) flows into the auxiliary heat exchanger (61), and exchanges heat with the recovery air to heat the recovery air. Then, the refrigerant passes through the auxiliary heat exchanger (61), and is expanded in the auxiliary expansion mechanism (66). The refrigerant returns to the one-way path (119) of the bridge circuit (110). The refrigerant flows out from the bridge circuit (110), and flows into the adsorption heat exchangers (51, 52) in which the adsorption process is performed. The air preheated in the auxiliary heat exchanger (61) passes through the adsorption heat exchangers (51, 52) serving as the heat radiator (condenser), thereby performing the recovery process.

A seventh aspect of the invention is intended for the humidity control apparatus of the second aspect of the invention, in which the both ends of the auxiliary circuit (60) are connected to a high-pressure line (50c) on a discharge side of the compressor (53), and the refrigerant adjusting mechanism (62) is switchable between a state in which refrigerant discharged from the compressor (53) flows through the high-pressure line (50c) of the main circuit (50a) and a state in which the refrigerant flows through the auxiliary circuit (60).

In the seventh aspect of the invention, when the temperature of recovery air flowing into the adsorption heat exchangers (51, 52) is low, the refrigerant adjusting mechanism (62) switches the circulation of refrigerant flowing through the high-pressure line (50c) of the main circuit (50a), and therefore the circulating refrigerant flows into the auxiliary circuit (60). The refrigerant flowing through the auxiliary circuit (60) flows into the auxiliary heat exchanger (61) to exchange heat with the recovery air, and heats the recovery air. The recovery air preheated in the auxiliary heat exchanger (61) passes through the adsorption heat exchangers (51, 52) serving as the heat radiator (condenser), thereby performing the recovery process.

An eighth aspect of the invention is intended for the humidity control apparatus of the second aspect of the invention, in which the auxiliary circuit (60) includes a first auxiliary circuit (60a) and a second auxiliary circuit (60b), each of which is connected to the liquid line (50b) between an associated one of the adsorption heat exchangers (51, 52) and the main expansion mechanism (55) in the main circuit (50a) at both ends, the auxiliary heat exchanger (61) includes a first auxiliary heat exchanger (61a) provided in the first auxiliary circuit (60a), and a second auxiliary heat exchanger (61b) provided in the second auxiliary circuit (60b), and the refrigerant adjusting mechanism (62) is switchable between a state in which liquid refrigerant flows through the liquid line (50b) of the main circuit (50a) and a state in which the liquid refrigerant flows through the first auxiliary circuit (60a) or the second auxiliary circuit (60b).
In the eighth aspect of the invention, when the temperature of recovery air flowing into the adsorption heat exchanger (51, 52) is low, the refrigerant adjusting mechanism (62) switches the circulation of refrigerant flowing through the liquid line (50b) between one of the adsorption heat exchangers (51, 52), in which the recovery process is performed, and the main expansion mechanism (55), and therefore the refrigerant flows into the first auxiliary circuit (60a). The refrigerant flowing through the first auxiliary circuit (60a) exchanges heat with the recovery air in the first auxiliary heat exchanger (61a), and heats the recovery air. The refrigerant passing through the first auxiliary heat exchanger (61a) returns to the main circuit (50a) through the first auxiliary circuit (60a), and is expanded in the main expansion mechanism (55).

When switching between the recovery process and the adsorption process, the refrigerant adjusting mechanism (62) switches the circulation of refrigerant flowing through the liquid line (50b) between the other adsorption heat exchanger (51, 52) in which the recovery process is performed and the main expansion mechanism (55), and therefore the refrigerant flows into the second auxiliary circuit (60b). The refrigerant flowing through the second auxiliary circuit (60b) exchanges heat with the recovery air in the second auxiliary heat exchanger (61 b), and heats the recovery air. The refrigerant passing through the second auxiliary heat exchanger (61b) returns to the main circuit (50a) through the second auxiliary circuit (60b), and is expanded in the main expansion mechanism (55).

A ninth aspect of the invention is intended for the humidity control apparatus of the second aspect of the invention, which further includes the bridge circuit (110) configured so that refrigerant constantly flows in one direction, and provided in the liquid line (50b) of the main circuit (50a). The main expansion mechanism (55) is arranged in the one-way path (119) connecting between the one middle point and the other middle point in the bridge circuit (110). The both ends of the auxiliary circuit (60) are connected to the upstream side of the main expansion mechanism (55) in the one-way path (119) of the bridge circuit (110). The refrigerant adjusting mechanism (62) is switchable between a state in which liquid refrigerant flows through the main circuit (50a) of the one-way path (119) of the bridge circuit (110), and a state in which the liquid refrigerant flows through the auxiliary circuit (60).

In the ninth aspect of the invention, when the temperature of recovery air flowing into the adsorption heat exchanger (51, 52) is low, the refrigerant adjusting mechanism (62) switches the circulation of refrigerant flowing through the one-way path (119) of the bridge circuit (110), and therefore the circulating refrigerant flows into the auxiliary circuit (60). The refrigerant flowing through the auxiliary circuit (60) exchanges heat with the recovery air in the auxiliary heat exchanger (61), and heats the recovery air. The air preheated in the auxiliary heat exchanger (61) passes through the adsorption heat exchanger (51, 52) serving as the heat radiator (condenser), thereby performing the recovery process.

A tenth aspect of the invention is intended for the humidity control apparatus of the ninth aspect of the invention, in which a noise canceling unit (65) is provided on an upstream side of the auxiliary heat exchanger (61) in the auxiliary circuit (60).

In the tenth aspect of the invention, the noise canceling unit (65) cancels noise caused from the bridge circuit (110).

An eleventh aspect of the invention is intended for the humidity control apparatus of the first aspect of the invention, in which the main expansion mechanism (55) includes a first expansion mechanism (55a) and a second expansion mechanism (55b), and the first expansion mechanism (55a), the auxiliary heat exchanger (61), and the second expansion mechanism (55b) are connected together in series in this order, and the first expansion mechanism (55a) or the second expansion mechanism (55b) positioned between the adsorption heat exchanger (51, 52) performing the recovery process, and the auxiliary heat exchanger (61) serves as the refrigerant adjusting mechanism (62).

In the eleventh aspect of the invention, when the temperature of recovery air flowing into one of the adsorption heat exchangers (51, 52) in which the recovery process is performed is low, the refrigerant adjusting mechanism (62) fully opens the second electric-operated expansion mechanism (55b), and therefore liquid refrigerant condensed in the one of the adsorption heat exchangers (51, 52) flows into the auxiliary heat exchanger (61). In the auxiliary heat exchanger (61), heat is exchanged between the refrigerant and the recovery air, thereby heating the recovery air. Then, the refrigerant passing through the auxiliary heat exchanger (61) is expanded in the first expansion mechanism (55a), and is evaporated in the other adsorption heat exchanger (51, 52) in which the adsorption process is performed. The air preheated in the auxiliary heat exchanger (61) passes through the one of the adsorption heat exchangers (51, 52), which serves as the heat radiator (condenser), thereby performing the recovery process.

When switching between the recovery process and the adsorption process, the refrigerant adjusting mechanism (62) fully opens the first expansion mechanism (55a), and therefore liquid refrigerant condensed in the other adsorption heat exchanger (51, 52) flows into the auxiliary heat exchanger (61). In the auxiliary heat exchanger (61), heat is exchanged between the refrigerant and the recovery air, thereby heating the recovery air. Then, the refrigerant passing through the auxiliary heat exchanger (61) is expanded in the second expansion mechanism (55b), and flows into the one of the adsorption heat exchangers (51, 52), in which the adsorption process is performed. The air preheated in the auxiliary heat exchanger (61) passes through the other adsorption heat exchanger (51, 52) serving as the heat radiator (condenser), thereby performing the recovery process.

A twelfth aspect of the invention is intended for the humidity control apparatus of the first aspect of the invention, which further includes the bridge circuit (110) configured so that refrigerant constantly flows in one direction, and provided in the liquid line (50b) of the main circuit (50a). The main expansion mechanism (55) is arranged in the one-way path (119) connecting between the one middle point and the other middle point in the bridge circuit (110). The auxiliary heat exchanger (61) is provided on the upstream side of the main expansion mechanism (55) of the one-way path (119) of the bridge circuit (110). The refrigerant adjusting mechanism (62) includes a heat exchange bypass line (67), one end of which is connected to the discharge side of the compressor (53), and the other end of which is connected to the upstream side of the auxiliary heat exchanger (61) of the one-way path (119) of the bridge circuit (110), and a switching unit (68) configured to switch between a state in which refrigerant discharged from the compressor (53) flows through the heat exchange bypass line (67) and a state in which circulation of the refrigerant through the heat exchange bypass line (67) is blocked.

In the twelfth aspect of the invention, when the temperature of recovery air flowing into the adsorption heat exchanger (51, 52) is low, the switching unit (68) of the refrigerant adjusting mechanism (62) switches the circulation of refrigerant flowing on the discharge side of the compressor (53) to the circulation through the heat exchange bypass line (67), and therefore the circulating refrigerant flows into the heat exchange bypass line (67). The refrigerant flowing through the heat exchange bypass line (67) flows into the upstream side of the auxiliary heat exchanger (61) in the one-way path (119) of the bridge circuit (110). In the auxiliary heat exchanger (61), heat is exchanged between the refrigerant and the recovery air, thereby heating the recovery air. The refrigerant passing through the auxiliary heat exchanger (61) circulates through the one-way path (119), and is expanded in the main expansion mechanism (55). The air preheated in the auxiliary heat exchanger (61) passes through the adsorption heat exchanger (51, 52) serving as the heat radiator (condenser), thereby performing the recovery process.

### ADVANTAGES OF THE INVENTION

In the first aspect of the invention, the auxiliary heat exchanger (61) is provided on the upstream side in the flow of recovery air to be supplied to the adsorption heat exchanger (51, 52). Thus, the recovery air to be supplied to the adsorption heat exchanger (51, 52) can be preheated by refrigerant flowing into the auxiliary heat exchanger (61). That is, the recovery air is heated by refrigerant circulating through the refrigerant circuit (50), thereby ensuring heating of the recovery air to a predetermined temperature. This ensures reduction or prevention of, e.g., freezing of an air path through which the recovery air passes even when the temperature of the recovery air to be supplied to the adsorption heat exchanger (51, 52) is low.

The refrigerant adjusting mechanism (62) is provided, which controls the inflow of refrigerant into the auxiliary heat exchanger (61). Thus, only when the preheating of the recovery air is required, refrigerant can flow into the auxiliary heat exchanger (61). That is, when the temperature of the recovery air to be supplied to the adsorption heat exchanger (51, 52) is a normal temperature (temperature from an ordinary temperature to a high temperature), the recovery air is not preheated. On the other hand, when the temperature of the recovery air to be supplied to the adsorption heat exchanger (51, 52) is low, refrigerant flows into the auxiliary heat exchanger (61) to heat the recovery air. This ensures reduction or prevention of unnecessary heating in the auxiliary heat exchanger (61), thereby realizing energy conservation of the humidity control apparatus.

In the second aspect of the invention, the refrigerant adjusting mechanism (62) switches the circulation of high-pressure refrigerant flowing through the main circuit (50a) to the circulation through the auxiliary circuit (60). Thus, only when the preheating of recovery air to be supplied to the adsorption heat exchanger (51, 52) is required, the circulation of refrigerant flowing through the main circuit (50a) can be switched to the circulation through the auxiliary circuit (60). That is, when the temperature of the recovery air to be supplied to the adsorption heat exchanger (51, 52) is the normal temperature (temperature from the ordinary temperature to the high temperature), refrigerant circulates through the main circuit (50a) without preheating the recovery air. On the other hand, when the temperature of the recovery air to be supplied to the adsorption heat exchanger (51, 52) is low, the refrigerant circulation is switched to the auxiliary circuit (60), thereby heating the recovery air. This ensures the reduction or prevention of, e.g., the freezing of the air path through which the recovery air passes even when the temperature of the recovery air to be supplied to the adsorption heat exchanger (51, 52) is low; and ensures the reduction or prevention of the unnecessary heating in the auxiliary heat exchanger (61). Thus, the energy conservation of the humidity control apparatus can be realized.

In the third aspect of the invention, the humidity control apparatus includes the expansion bypass line (64) configured to bypass the main expansion mechanism (55) of the main circuit (50a), and the auxiliary expansion mechanism (66) provided on a downstream side of the expansion bypass line (64). Thus, only when the preheating of recovery air to be supplied to the adsorption heat exchanger (51, 52) is required, the refrigerant circulation through the main circuit (50a) can be switched to the expansion bypass line (64). That is, when the temperature of the recovery air to be supplied to the adsorption heat exchanger (51, 52) is the normal temperature (temperature from the ordinary temperature to the high temperature), refrigerant circulates through the main circuit (50a) without preheating the recovery air. On the other hand, when the temperature of the recovery air to be supplied to the adsorption heat exchanger (51, 52) is low, the refrigerant circulation is switched to the circulation through the expansion bypass line (64), thereby heating the recovery air. This ensures the reduction or prevention of, e.g., the freezing of the air path through which the recovery air passes even when the temperature of the recovery air to be supplied to the adsorption heat exchanger (51, 52) is low; and ensures the reduction or prevention of the unnecessary heating in the auxiliary heat exchanger (61). Thus, the energy conservation of the humidity control apparatus can be realized.

In the fourth aspect of the invention, the humidity control apparatus includes the bridge circuit (110) in the liquid line (50b) of the main circuit (50a), and the main expansion mechanism (55) is arranged in the one-way path (119) of the bridge circuit (110). Further, the expansion bypass line (64) configured to bypass the main expansion mechanism (55) is provided. Thus, refrigerant passing through the main expansion mechanism (55) can constantly flow in one direction, and refrigerant passing through the expansion bypass line (64) can flow in one direction. That is, the flow of refrigerant passing through the expansion bypass line (64) is not reversibly switched, and therefore the auxiliary expansion mechanism (66) may be provided only on the downstream side of the auxiliary heat exchanger (61) in the refrigerant flow direction. This simplifies a configuration of the auxiliary circuit (60), thereby reducing a manufacturing cost of the humidity control apparatus.

In the fifth aspect of the invention, the auxiliary line (58) is provided, which connects the upstream side of the main expansion mechanism (55) of the one-way path (119) to the liquid line (50b) between the bridge circuit (110) and one of the adsorption heat exchangers (51, 52), and which has the capillary tube (59). Thus, liquid refrigerant accumulated between an inflow side of the main expansion mechanism (55) and an outflow side of the check valve (115, 117) can be returned to the main circuit (50a) side. This ensure reduction or prevention of accumulation of a large amount of liquid refrigerant, i.e., liquid sealing on the inflow side of the main expansion mechanism (55).

In the sixth aspect of the invention, the bridge circuit (110) is provided in the expansion bypass line (64), and therefore refrigerant passing through the expansion bypass line (64) flows in one direction. Thus, refrigerant flowing into the auxiliary expansion mechanism (66) of the expansion bypass line (64) can flow in one direction. That is, the flow of refrigerant passing through the auxiliary expansion mechanism (66) is not reversibly switched, and therefore the auxiliary expansion mechanism (66) may be provided only on the downstream side of the auxiliary heat exchanger (61) in the refrigerant flow direction. This simplifies the auxiliary circuit (60), thereby reducing the manufacturing cost of the humidity control apparatus.

In the seventh aspect of the invention, the circulation of high-pressure refrigerant flowing through the high-pressure line (50c) is switched to the circulation through the auxiliary circuit (60). Thus, only when the preheating of recovery air to be supplied to the adsorption heat exchanger (51, 52) is required, the circulation of refrigerant flowing through the high-pressure line (50c) can be switched to the circulation through the auxiliary circuit (60). That is, when the temperature of the recovery air to be supplied to the adsorption heat exchanger (51, 52) is the normal temperature (temperature from the ordinary temperature to the high temperature), refrigerant circulates through the high-pressure line (50c) without preheating the recovery air. On the other hand, when the temperature of the recovery air to be supplied to the adsorption heat exchanger (51, 52) is low, the refrigerant circulation through the main circuit (50a) is switched to the circulation through the auxiliary circuit (60), thereby heating the recovery air. This ensures the reduction or prevention of, e.g., the freezing of the air path through which the recovery air passes even when the temperature of the recovery air to be supplied to the adsorption heat exchanger (51, 52) is low; and ensures the reduction or prevention of the unnecessary heating in the auxiliary heat exchanger (61). Thus, the energy conservation of the humidity control apparatus can be realized.

According to the eighth aspect of the invention, the first auxiliary circuit (60a) and the second auxiliary circuit (60b) are connected to the liquid line (50b) of the main circuit (50a). Thus, only when the preheating of recovery air to be supplied to the adsorption heat exchanger (51, 52) is required, the circulation of refrigerant flowing through the main circuit (50a) can be switched to the circulation through the auxiliary circuit (60), and the recovery air can be heated by refrigerant condensed in the adsorption heat exchanger (51, 52). That is, heat remaining in refrigerant after the recovery process (i.e., heat dissipation (or condensation)) in the adsorption heat exchanger (51, 52) can be used to heat the recovery air. This allows an effective use of heat from refrigerant flowing through the refrigerant circuit (50), thereby realizing the energy conservation of the humidity control apparatus.

According to the ninth aspect of the invention, the bridge circuit (110) is provided in the liquid line (50b) of the main circuit (50a). The flow of refrigerant flowing into the main expansion mechanism (55) flows in one direction, and the circulation of refrigerant flowing through the one-way path (119) of the bridge circuit (110) is switched to the circulation through the auxiliary circuit (60). Thus, refrigerant passing through the auxiliary circuit (60) can flow in one direction. That is, the flow of refrigerant passing through the auxiliary circuit (60) is not reversibly switched, and therefore the auxiliary heat exchanger (61) may be provided only on the upstream side of the main expansion mechanism (55) in the refrigerant flow direction. This simplifies the configuration of the auxiliary circuit (60), thereby reducing the manufacturing cost of the humidity control apparatus.

According to the tenth aspect of the invention, the noise canceling unit (65) is provided on the upstream side of the auxiliary heat exchanger (61) in the refrigerant flow, and therefore noise caused due to air vibration in the bridge circuit (110) can be cancelled.

According to the eleventh aspect of the invention, the first expansion mechanism (55a), the auxiliary heat exchanger (61), and the second expansion mechanism (55b) are connected together in series. Thus, even if refrigerant circulating through the refrigerant circuit (50) flows in any of forward and backward directions, high-pressure refrigerant can flows into the auxiliary heat exchanger (61), and an amount of refrigerant flowing into the auxiliary heat exchanger (61) can be adjusted.

In the twelfth aspect of the invention, the heat exchange bypass line (67) is provided, which connects the upstream side of the auxiliary heat exchanger (61) of the one-way path (119) of the bridge circuit (110) to the discharge side of the compressor (53), and the refrigerant circulation through the refrigerant circuit (50) is switched between the circulation through the main circuit (50a) and the circulation through the heat exchange bypass line (67). Thus, the circulation in the refrigerant circuit (50) can be switched to the circulation through the heat exchange bypass line (67). That is, high-pressure refrigerant discharged from the compressor (53) flows into the auxiliary heat exchanger (61) without dissipating heat in the adsorption heat exchanger (51, 52). This improves heating performance of recovery air to be supplied to the adsorption heat exchanger (51, 52).

### BRIEF DESCRIPTION OF THE DRAWINGS

[FIG. 1] FIG. 1 is a perspective view illustrating a humidity control apparatus of a first embodiment when viewing the humidity control apparatus from the front.
[FIG. 2] FIG. 2 includes a plan view, a left side view, and a right side view illustrating the humidity control apparatus of the first embodiment.
[FIG. 3] FIG. 3 is a schematic layout illustrating a relationship between an auxiliary heat exchanger and an adsorption heat exchanger in first to eighth embodiments.
[FIG. 4] FIG. 4 is a piping system diagram illustrating a refrigerant circuit of the first embodiment.
[FIG. 5] FIG. 5 includes a plan view, a left side view, and a right side view illustrating an air flow in a first process of a dehumidification operation of the humidity control apparatus of the first embodiment.
[FIG. 6] FIG. 6 includes a plan view, a left side view, and a right side view illustrating an air flow in a second process of the dehumidification operation of the humidity control apparatus of the first embodiment.
[FIG. 7] FIG. 7 includes a plan view, a left side view, and a right side view illustrating an air flow in a first process of a humidification operation of the humidity control apparatus of the first embodiment.
[FIG. 8] FIG. 8 includes a plan view, a left side view, and a right side view illustrating an air flow in a second process of the humidification operation of the humidity control apparatus of the first embodiment.
[FIG. 9] FIG. 9 includes a plan view, a left side view, and a right side view illustrating an air flow in a ventilation operation of the humidity control apparatus of the first embodiment.
[FIG. 10] FIG. 10 is a piping system diagram illustrating a refrigerant circuit of the second embodiment.
[FIG. 11] FIG. 11 includes a plan view, a left side view, a right side view illustrating a humidity control apparatus of the second embodiment.
[FIG. 12] FIG. 12 is a piping system diagram illustrating a refrigerant circuit of the third embodiment.
[FIG. 13] FIG. 13 is a piping system diagram illustrating a variation of the refrigerant circuit illustrated in FIG. 12.
[FIG. 14] FIG. 14 is a piping system diagram illustrating a refrigerant circuit of the fourth embodiment.
[FIG. 15] FIG. 15 is a piping system diagram illustrating a refrigerant circuit of the fifth embodiment.
[FIG. 16] FIG. 16 is a piping system diagram illustrating a variation of the refrigerant circuit illustrated in FIG. 15.
[FIG. 17] FIG. 17 is a piping system diagram illustrating a refrigerant circuit of the sixth embodiment.
[FIG. 18] FIG. 18 is a piping system diagram illustrating a refrigerant circuit of the seventh embodiment.
[FIG. 19] FIG. 19 is a piping system diagram illustrating a refrigerant circuit of the eighth embodiment.

### DESCRIPTION OF EMBODIMENTS

Embodiments of the present invention will be described in detail below with reference to the drawings.

### <First Embodiment of the Invention>

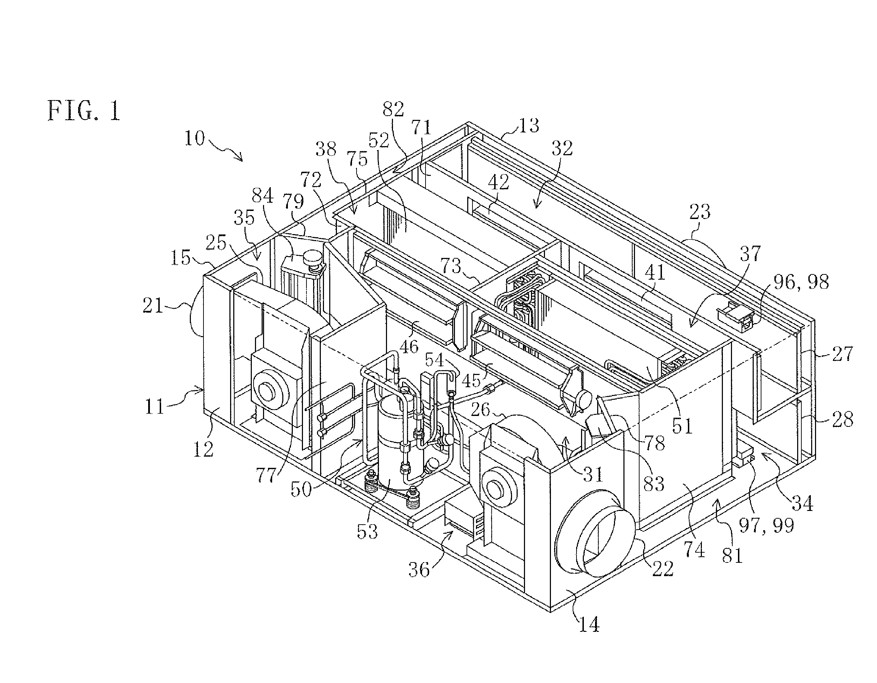

As illustrated in FIG. 1, a humidity control apparatus (10) of a first embodiment is for controlling indoor humidity, and ventilating a room. In the humidity control apparatus (10), the humidity of taken outdoor air (OA) is controlled, and then such air is supplied to the room. At the same time, taken room air (RA) is discharged to outside the room. In a target room of the humidity control apparatus (10) of the present embodiment, a separately-provided air conditioner (not shown in the figure) controls a temperature.

### <Entire Configuration of Humidity Control Apparatus>

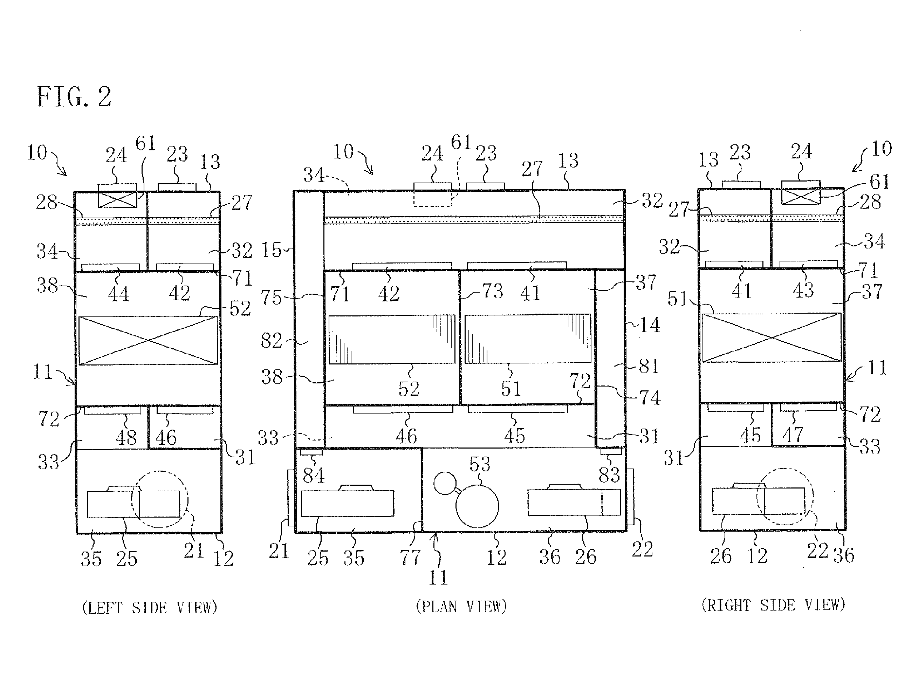

The humidity control apparatus (10) will be described with reference to FIG. 1 or 2. Note that terms "upper," "lower," "left," "right," "front," "rear," "near," and "back" used for the description herein indicate directions when viewing the humidity control apparatus (10) from the front.

The humidity control apparatus (10) includes a casing (11) in which a refrigerant circuit (50) is accommodated. In the refrigerant circuit (50), a first adsorption heat exchanger (51), a second adsorption heat exchanger (52), a compressor (53), a four-way switching valve (54), and a main electric-operated expansion valve (55) are connected together by a refrigerant pipe (57). Note that the refrigerant circuit (50) will be described later.

The casing (11) is formed in substantially flat rectangular parallelepiped shape having a relatively low height. In the casing (11) illustrated in FIG. 1, a side surface on a near left side (i.e., front surface) serves as a front panel section (12); a side surface on a back right side (i.e., rear surface) serves as a rear panel section (13); a side surface on a near right side serves as a first side panel section (14); and a side surface on a back left side serves as a second side panel section (15).

An outdoor air suction port (24), a room air suction port (23), an air supply port (22), and an air discharge port (21) are formed in the casing (11). The outdoor air suction port (24) and the room air suction port (23) open in the rear panel section (13). The outdoor air suction port (24) is arranged in a lower section of the rear panel section (13). The room air suction port (23) is arranged in an upper section of the rear panel section (13). The air supply port (22) is arranged close to an end section of the first side panel section (14) on the front panel section (12) side. The air discharge port (21) is arranged close to an end section of the second side panel section (15) on the front panel section (12) side.

An inner space of the casing (11) includes an upstream partition plate (71), a downstream partition plate (72), a central partition plate (73), a first partition plate (74), and a second partition plate (75). The partition plates (71-75) are vertically arranged on a bottom plate of the casing (11), and extend from the bottom plate to a top plate to divide the inner space of the casing (11).

The upstream partition plate (71) and the downstream partition plate (72) are arranged at a predetermined distance in a front-rear direction of the casing (11) so as to be parallel to the front panel section (12) and the rear panel section (13). The upstream partition plate (71) is arranged closer to the rear panel section (13). The downstream partition plate (72) is arranged closer to the front panel section (12).

The first partition plate (74) and the second partition plate (75) are arranged parallel to the first side panel section (14) and the second side panel section (15). The first partition plate (74) is arranged at a predetermined distance from the first side panel section (14) so that a space between the upstream partition plate (71) and the downstream partition plate (72) is closed from the right. The second partition plate (75) is arranged at a predetermined distance from the second side panel section (15) so that the space between the upstream partition plate (71) and the downstream partition plate (72) is closed from the left.

The central partition plate (73) is arranged between the upstream partition plate (71) and the downstream partition plate (72) so as to be perpendicular to the upstream partition plate (71) and the downstream partition plate (72). The central partition plate (73) is provided so as to extend from the upstream partition plate (71) to the downstream partition plate (72), and divides the space between the upstream partition plate (71) and the downstream partition plate (72) into right and left spaces.

In the casing (11), a space between the upstream partition plate (71) and the rear panel section (13) is divided into upper and lower spaces. The upper space serves as a room air path (32), and the lower space serves as an outdoor air path (34). The room air path (32) communicates with the room through a duct connected to the room air suction port (23). A room air filter (27), a room air humidity sensor (96), and a room air temperature sensor (98) are arranged in the room air path (32). The outdoor air path (34) communicates with an outdoor space through a duct and an auxiliary heat exchanger (61) connected to the outdoor air suction port (24). That is, outdoor air discharged from the outdoor air suction port (24) to the outdoor air path (34) through the duct necessarily passes through the auxiliary heat exchanger (61), and then flows into the outdoor air path (34). An outdoor air filter (28), an outdoor air humidity sensor (97), and an outdoor air temperature sensor (99) are arranged in the outdoor air path (34).

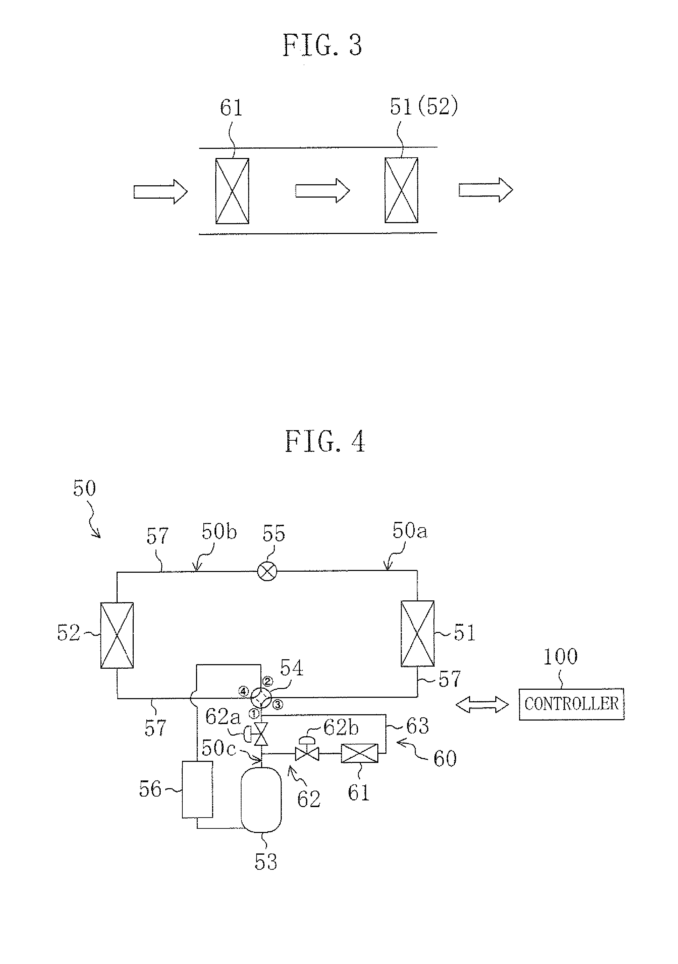

As illustrated in FIGS. 2 and 3, the auxiliary heat exchanger (61) is for preheating recovery air to be supplied to the adsorption heat exchanger (51, 52). The auxiliary heat exchanger (61) is a so-called "cross-fin-type fin-and-tube heat exchanger," and is formed in rectangular thick-plate-like shape or flat rectangular parallelepiped shape. The auxiliary heat exchanger (61) is vertically arranged between the outdoor air suction port (24) and the outdoor air path (34) so that front and rear surfaces of the auxiliary heat exchanger (61) are parallel to the rear panel section (13) and the upstream partition plate (71).

The room air humidity sensor (96) is for detecting relative humidity of room air in the room air path (32). The outdoor air humidity sensor (97) is for detecting relative humidity of outdoor air in the outdoor air path (34). The room air temperature sensor (98) is for detecting a room air temperature in the room air path (32). The outdoor air temperature sensor (99) is for detecting an outdoor air temperature in the outdoor air path (34).

The space between the upstream partition plate (71) and the downstream partition plate (72) in the casing (11) is divided into the right and left spaces by the central partition plate (73). The space at the right of the central partition plate (73) serves as a first heat exchanger chamber (37), and the space at the left of the central partition plate (73) serves as a second heat exchanger chamber (38). The first adsorption heat exchanger (51) is accommodated in the first heat exchanger chamber (37). The second adsorption heat exchanger (52) is accommodated in the second heat exchanger chamber (38). Although not shown in the figure, the main electric-operated expansion valve (55) of the refrigerant circuit (50) is accommodated in the first heat exchanger chamber (37).

The adsorption heat exchanger (51, 52) is a so-called "cross-fin-type fin-and-tube heat exchanger" on which adsorbent is supported, and is formed in rectangular thick-plate-like shape or flat rectangular parallelepiped shape. The adsorption heat exchanger (51, 52) is vertically arranged in the heat exchanger chamber (37, 38) so that front and rear surfaces of the adsorption heat exchanger (51, 52) are parallel to the upstream partition plate (71) and the downstream partition plate (72).

In the inner space of the casing (11), a space along a front surface of the downstream partition plate (72) is divided into upper and lower spaces. The upper space of such horizontally-divided spaces serves as an air supply path (31), and the lower space serves as an air discharge path (33).

Four openable dampers (41-44) are provided in the upstream partition plate (71). The damper (41-44) is formed in substantially horizontally-elongated rectangular shape. Specifically, in a section (upper section) of the upstream partition plate (71), which faces the room air path (32), the first room air damper (41) is attached on the right side relative to the central partition plate (73), and the second room air damper (42) is attached on the left side relative to the central partition plate (73). In addition, in a section (lower section) of the upstream partition plate (71), which faces the outdoor air path (34), the first outdoor air damper (43) is attached on the right side relative to the central partition plate (73), and the second outdoor air damper (44) is attached on the left side relative to the central partition plate (73).

Four openable dampers (45-48) are provided in the downstream partition plate (72). The damper (45-48) is formed in substantially horizontally-elongated rectangular shape. Specifically, in a section (upper section) of the downstream partition plate (72), which faces the air supply path (31), the first air supply damper (45) is attached on the right side relative to the central partition plate (73), and the second air supply damper (46) is attached on the left side relative to the central partition plate (73). In addition, in a section (lower section) of the downstream partition plate (72), which faces the air discharge path (33), the first air discharge damper (47) is attached on the right side relative to the central partition plate (73), and the second air discharge damper (48) is attached on the left side relative to the central partition plate (73).

In the casing (11), a space defined by the air supply path (31), the air discharge path (33), and the front panel section (12) is divided into right and left spaces by a partition plate (77). The space at the right of the partition plate (77) serves as an air supply fan chamber (36), and the space at the left of the partition plate (77) serves as an air discharge fan chamber (35).

An air supply fan (26) is accommodated in the air supply fan chamber (36). In addition, an air discharge fan (25) is accommodated in the air discharge fan chamber (35). The air supply fan (26) and the air discharge fan (25) are centrifugal multi-blade fans (so-called "sirocco" fans). In the air supply fan chamber (36), air sucked from the downstream partition plate (72) side is discharged through the air supply port (22). In the air discharge fan chamber (35), air sucked from the downstream partition plate (72) side is discharged through the air discharge port (21).

The compressor (53) and the four-way switching valve (54) of the refrigerant circuit (50) are accommodated in the air supply fan chamber (36).

The compressor (53) is for compressing refrigerant flowing though the refrigerant circuit (50) to high pressure. The compressor (53) is a hermetic compressor, and is arranged between the air supply fan (26) and the partition plate (77) in the air supply fan chamber (36).

In the casing (11), a space between the first partition plate (74) and the first side panel section (14) serves as a first bypass path (81). A start point of the first bypass path (81) communicates only with the outdoor air path (34), and is isolated from the room air path (32). A terminal point of the first bypass path (81) is separated from the air supply path (31), the air discharge path (33), and the air supply fan chamber (36) by a partition plate (78). A first bypass damper (83) is provided in a section of the partition plate (78), which faces the air supply fan chamber (36).

In the casing (11), a space between the second partition plate (75) and the second side panel section (15) serves as a second bypass path (82). A start point of the second bypass path (82) communicates only with the room air path (32), and is isolated from the outdoor air path (34). A terminal point of the second bypass path (82) is separated from the air supply path (31), the air discharge path (33), and the air discharge fan chamber (35) by a partition plate (79). A second bypass damper (84) is provided in a section of the partition plate (79), which faces the air discharge fan chamber (35).

### <Entire Configuration of Refrigerant Circuit>

Next, a configuration of the refrigerant circuit, which is a feature of the present invention will be described.

As illustrated in FIG. 4, the refrigerant circuit (50) includes a main circuit (50a) and an auxiliary circuit (60). Circulation of refrigerant flowing through the refrigerant circuit (50) is controlled by a controller (100).

In the main circuit (50a), the first adsorption heat exchanger (51), the second adsorption heat exchanger (52), the compressor (53), the four-way switching valve (54), and the main electric-operated expansion valve (55) are connected together by the refrigerant pipe (57), and a vapor compression refrigeration cycle is performed by refrigerant circulating through the refrigerant pipe (57).

A discharge side of the compressor (53) is connected to a first port of the four-way switching valve (54), and a suction side of the compressor (53) is connected to a second port of the four-way switching valve (54) through a receiver (56). Both ends of the auxiliary circuit (60) are connected to a high-pressure line (50c) connecting between the discharge side of the compressor (53) and the first port. The first adsorption heat exchanger (51), the main electric-operated expansion valve (55), and the second adsorption heat exchanger (52) are connected together from a third port of the four-way switching valve (54) to a fourth port of the four-way switching valve (54) in this order. The main electric-operated expansion valve (55) serves as a main expansion mechanism configured to evaporate refrigerant circulating though the main circuit (50a) of the refrigerant circuit (50).

In the auxiliary circuit (60), the auxiliary heat exchanger (61) and a switching solenoid valve (62) are connected to the main circuit (50a) through an auxiliary refrigerant pipe (63), a part of refrigerant flowing the main circuit (50a) flows through the auxiliary circuit (60).

The auxiliary refrigerant pipe (63) is formed in tubular shape so that gas or liquid can circulate through the auxiliary refrigerant pipe (63). One end of the auxiliary refrigerant pipe (63) is connected to a section closer to the discharge side of the compressor (53) in the high-pressure line (50c) of the main circuit (50a), and the other end is connected to a section closer to the first port of the four-way switching valve (54) in the high-pressure line (50c). That is, high-pressure refrigerant discharged from the compressor (53) flows into the auxiliary refrigerant pipe (63). The auxiliary heat exchanger (61) is connected in the middle of the auxiliary refrigerant pipe (63).

The auxiliary heat exchanger (61) is for condensing high-pressure refrigerant flowing through the auxiliary refrigerant pipe (63) (i.e., for dissipating heat from the refrigerant). The auxiliary heat exchanger (61) heats outdoor air by using high-pressure refrigerant discharged from the compressor (53).

The switching solenoid valve (62) serves as a refrigerant adjusting mechanism configured to switch refrigerant circulation so that refrigerant discharged from the compressor (53) and flowing through the high-pressure line (50c) flows into the auxiliary circuit (60). The switching solenoid valve (62) is an openable solenoid valve. In the refrigerant circuit (50) of the first embodiment, there are two solenoid valves, i.e., a fist switching solenoid valve (62a) and a second switching solenoid valve (62b). An opening/closing of the switching solenoid valve (62a, 62b) is controlled by the controller (100).

The first switching solenoid valve (62a) is provided between a position where the high-pressure line (50c) is connected to one end of the auxiliary refrigerant pipe (63) and a position where the high-pressure line (50c) is connected to the other end of the auxiliary refrigerant pipe (63).

The second switching solenoid valve (62b) is provided on an upstream side of the auxiliary heat exchanger (61) of the auxiliary circuit (60) in a refrigerant flow.

The controller (100) is connected to the refrigerant circuit (50), and controls a starting/stopping of the compressor (53), an opening/closing of the main electric-operated expansion valve (55), and the opening/closing of the switching solenoid valve (62).

The four-way switching valve (54) is arranged between the air supply fan (26) and the partition plate (77) in the air supply fan chamber (36). The four-way switching valve (54) is switchable between a first state in which the first port communicates with the third port, and the second port communicates with the fourth port (state indicated by a solid line in FIG. 4); and a second state in which the first port communicates with the fourth port, and the second port communicates with the third port (state indicated by a dashed line in FIG. 4).

### Operation

In the humidity control apparatus (10), the dehumidification operation, the humidification operation, and a ventilation operation are selectively performed. In the humidity control apparatus (10) which is in the dehumidification or humidification operation, the humidity of taken outdoor air (OA) is controlled, and then such air is supplied to the room as supply air (SA). At the same time, taken room air (RA) is discharged to outside the room as exhaust air (EA). In the humidity control apparatus (10) which is in the ventilation operation, taken outdoor air (OA) is supplied to the room as supply air (SA) without being controlled. At the same time, taken room air (RA) is discharged to outside the room as exhaust air (EA) without being controlled.

### <Dehumidification Operation>

In the humidity control apparatus (10) which is in the dehumidification operation, first and second processes which will be described later are alternately repeated at predetermined time intervals (e.g., every four minutes). In the dehumidification operation, the first bypass damper (83) and the second bypass damper (84) stay closed.

In the humidity control apparatus (10) which is in the dehumidification operation, outdoor air is taken into the casing (11) through the outdoor air suction port (24) and the auxiliary heat exchanger (61) as first air (air for adsorption), and room air is taken into the casing (11) through the room air suction port (23) as second air (air for recovery).

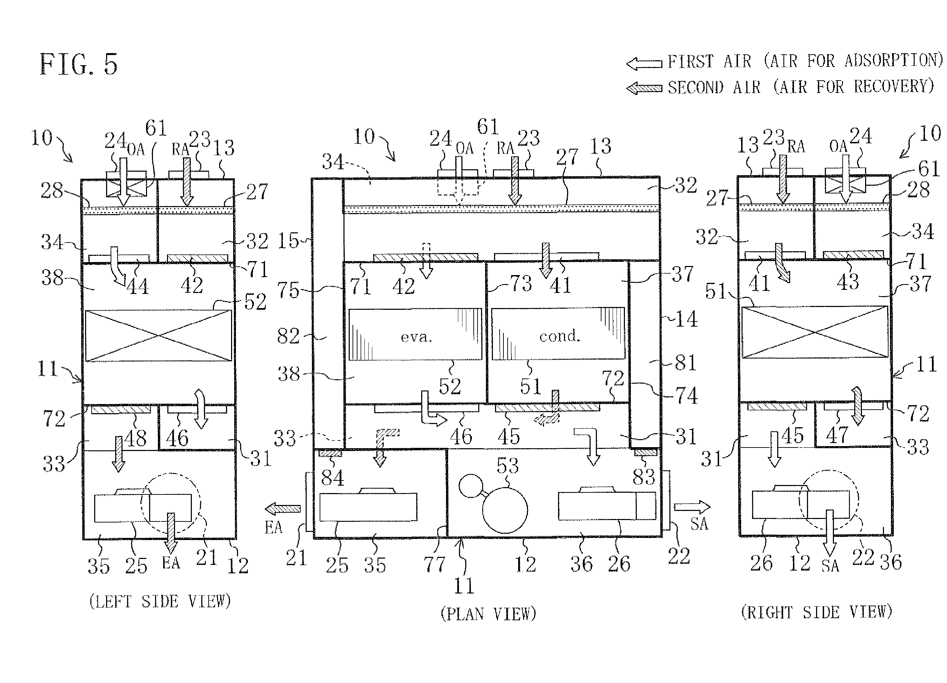

First, the first process of the dehumidification operation will be described. As illustrated in FIG. 5, during the first process, the first room air damper (41), the second outdoor air damper (44), the second air supply damper (46), and the first air discharge damper (47) are opened; and the second room air damper (42), the first outdoor air damper (43), the first air supply damper (45), and the second air discharge damper (48) are closed. In the refrigerant circuit (50) which is in the first process, the first switching solenoid valve (62a) is opened, and the second switching solenoid valve (62b) is closed. In addition, the four-way switching valve (54) is set to the first state (state indicated by the solid line in FIG. 4). The first adsorption heat exchanger (51) serves as a condenser, whereas the second adsorption heat exchanger (52) serves as an evaporator.

The first air (outdoor air) flows into the outdoor air path (34) through the outdoor air suction port (24) and the auxiliary heat exchanger (61). At this point, refrigerant does not circulate through the auxiliary heat exchanger (61), and therefore heat is not exchanged between the first air (outdoor air) and the refrigerant. The first air flowing into the outdoor air path (34) and passing through the outdoor air filter (28) flows into the second heat exchanger chamber (38) through the second outdoor air damper (44), and then passes through the second adsorption heat exchanger (52). In the second adsorption heat exchanger (52), moisture in the first air is adsorbed to the adsorbent, and adsorption heat generated thereupon is absorbed by refrigerant. That is, in the second adsorption heat exchanger (52), a adsorption process is performed by the adsorbent. The first air dehumidified in the second adsorption heat exchanger (52) flows into the air supply path (31) through the second air supply damper (46). After passing through the air supply fan chamber (36), the first air is supplied to the room through the air supply port (22).

Meanwhile, the second air (room air) flowing into the room air path (32) and passing through the room air filter (27) flows into the first heat exchanger chamber (37) through the first room air damper (41), and then passes through the first adsorption heat exchanger (51). In the first adsorption heat exchanger (51), moisture is desorbed from the adsorbent heated by refrigerant, and the desorbed moisture is imparted to the second air. That is, in the first adsorption heat exchanger (51), a recovery process is performed by the adsorbent. The second air to which moisture is imparted in the first adsorption heat exchanger (51) flows into the air discharge path (33) through the first air discharge damper (47). After passing through the air discharge fan chamber (35), the second air is discharged to outside the room through the air discharge port (21).

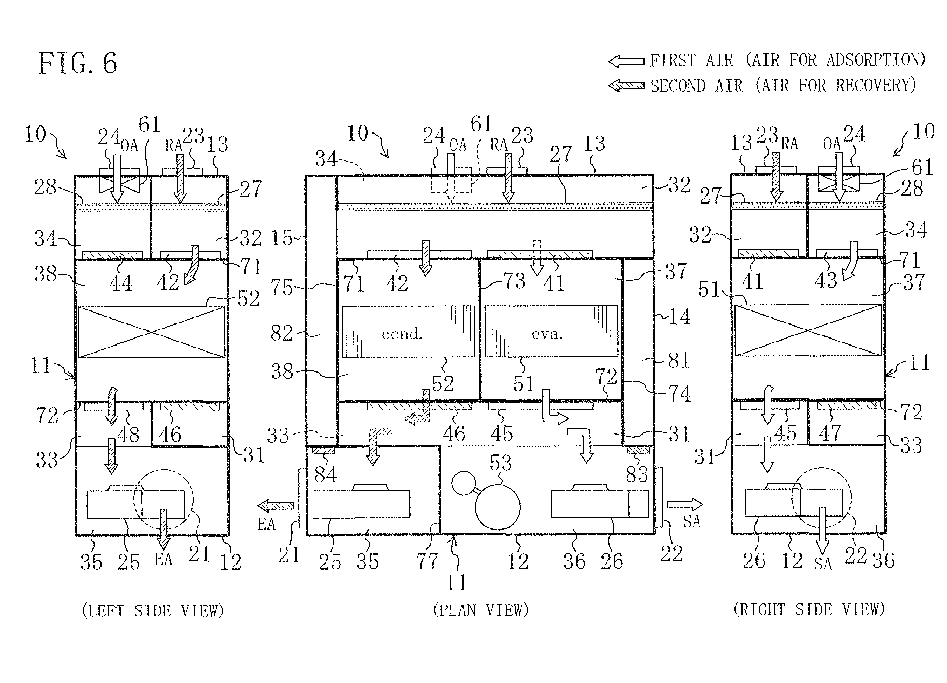

Next, the second process of the dehumidification operation will be described. As illustrated in FIG. 6, during the second process, the second room air damper (42), the first outdoor air damper (43), the first air supply damper (45), and the second air discharge damper (48) are opened; and the first room air damper (41), the second outdoor air damper (44), the second air supply damper (46), and the first air discharge damper (47) are closed. In the refrigerant circuit (50) which is in the second process, the first switching solenoid valve (62a) is opened, and the second switching solenoid valve (62b) is closed. In addition, the four-way switching valve (54) is set to the second state (state indicated by the dashed line in FIG. 4). The first adsorption heat exchanger (51) serves as the evaporator, whereas the second adsorption heat exchanger (52) serves as the condenser.

The first air (outdoor air) flows into the outdoor air path (34) through the outdoor air suction port (24) and the auxiliary heat exchanger (61). At this point, refrigerant does not circulate through the auxiliary heat exchanger (61), and therefore heat is not exchanged between the first air (outdoor air) and the refrigerant. The first air flowing into the outdoor air path (34), and passing through the outdoor air filter (28) flows into the first heat exchanger chamber (37) through the first outdoor air damper (43), and then passes through the first adsorption heat exchanger (51). In the first adsorption heat exchanger (51), moisture in the first air is adsorbed to the adsorbent, and adsorption heat generated thereupon is absorbed by refrigerant. That is, in the first adsorption heat exchanger (51), the adsorption process is performed by the adsorbent. The first air dehumidified in the first adsorption heat exchanger (51) flows into the air supply path (31) through the first air supply damper (45). After passing through the air supply fan chamber (36), the first air is discharged to the room through the air supply port (22).

Meanwhile, the second air (room air) flowing into the room air path (32) and passing through the room air filter (27) flows into the second heat exchanger chamber (38) through the second room air damper (42), and then passes through the second adsorption heat exchanger (52). In the second adsorption heat exchanger (52), moisture is desorbed from the adsorbent heated by refrigerant, the desorbed moisture is imparted to the second air. That is, in the second adsorption heat exchanger (52), the recovery process is performed by the adsorbent. The second air to which moisture is imparted in the second adsorption heat exchanger (52) flows into the air discharge path (33) through the second air discharge damper (48). After passing through the air discharge fan chamber (35), the second air is discharged to outside the room through the air discharge port (21).

### <Humidification Operation>

In the humidity control apparatus (10) which is in the humidification operation, first and second processes which will be described later are alternately repeated at predetermined time intervals (e.g., every three minutes). In the humidification operation, the first bypass damper (83) and the second bypass damper (84) stay closed. In the humidity control apparatus (10) which is in the humidification operation, outdoor air is taken into the casing (11) through the outdoor air suction port (24) as second air (air for recovery), and room air is taken into the casing (11) through the room air suction port (23) as first air (air for adsorption).

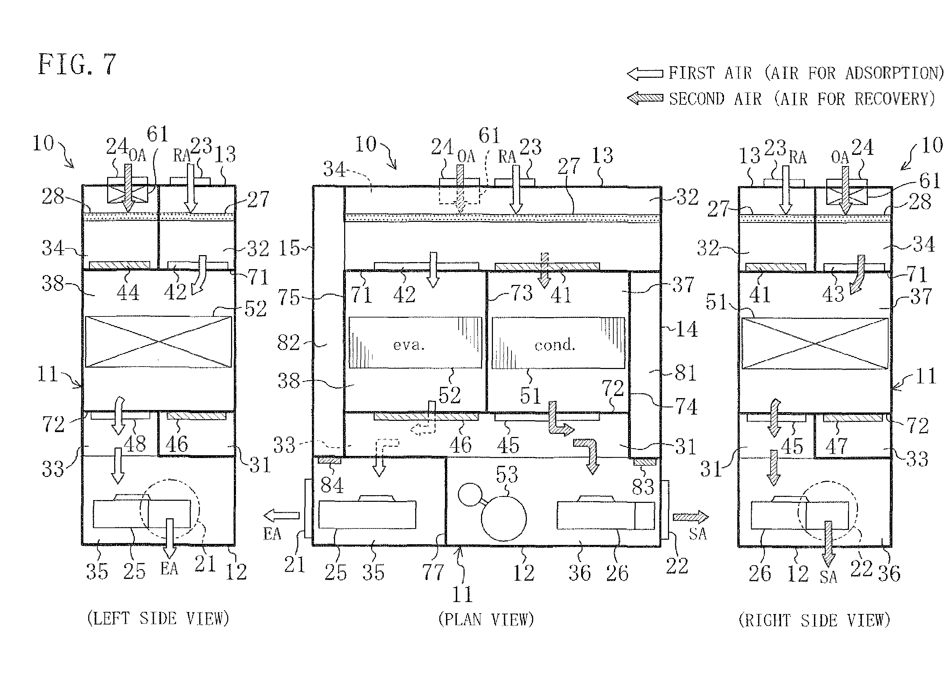

First, the first process of the humidification operation will be described. As illustrated in FIG. 7, during the first process, the second room air damper (42), the first outdoor air damper (43), the first air supply damper (45), and the second air discharge damper (48) are opened; and the first room air damper (41), the second outdoor air damper (44), the second air supply damper (46), and the first air discharge damper (47) are closed. In the refrigerant circuit (50) which is in the first process, the first switching solenoid valve (62a) is opened, and the second switching solenoid valve (62b) is closed. In addition, the four-way switching valve (54) is set to the first state (state indicated by the solid line in FIG. 4). The first adsorption heat exchanger (51) serves as the condenser, whereas the second adsorption heat exchanger (52) serves as the evaporator.

The first air flowing into the room air path (32) and passing through the room air filter (27) flows into the second heat exchanger chamber (38) through the second room air damper (42), and then passes through the second adsorption heat exchanger (52). In the second adsorption heat exchanger (52), moisture in the first air is adsorbed to the adsorbent, and adsorption heat generated thereupon is absorbed by refrigerant. That is, in the second adsorption heat exchanger (52), the adsorption process is performed by the adsorbent. The first air from which moisture is removed in the second adsorption heat exchanger (52) flows into the air discharge path (33) through the second air discharge damper (48). After passing through the air discharge fan chamber (35), the first air is discharged to outside the room through the air discharge port (21).

Meanwhile, the second air (outdoor air) flows into the outdoor air path (34) through the outdoor air suction port (24) and the auxiliary heat exchanger (61). At this point, refrigerant does not circulate through the auxiliary heat exchanger (61), and therefore heat is not exchanged between the second air and the refrigerant. The second air flowing into the outdoor air path (34) and passing through the outdoor air filter (28) flows into the first heat exchanger chamber (37) through the first outdoor air damper (43), and then passes through the first adsorption heat exchanger (51). In the first adsorption heat exchanger (51), moisture is desorbed from the adsorbent heated by refrigerant, and the desorbed moisture is imparted to the second air. That is, in the first adsorption heat exchanger (51), the recovery process is performed by the adsorbent. The second air humidified in the first adsorption heat exchanger (51) flows into the air supply path (31) through the first air supply damper (45). After passing through the air supply fan chamber (36), the second air is supplied to the room through the air supply port (22).

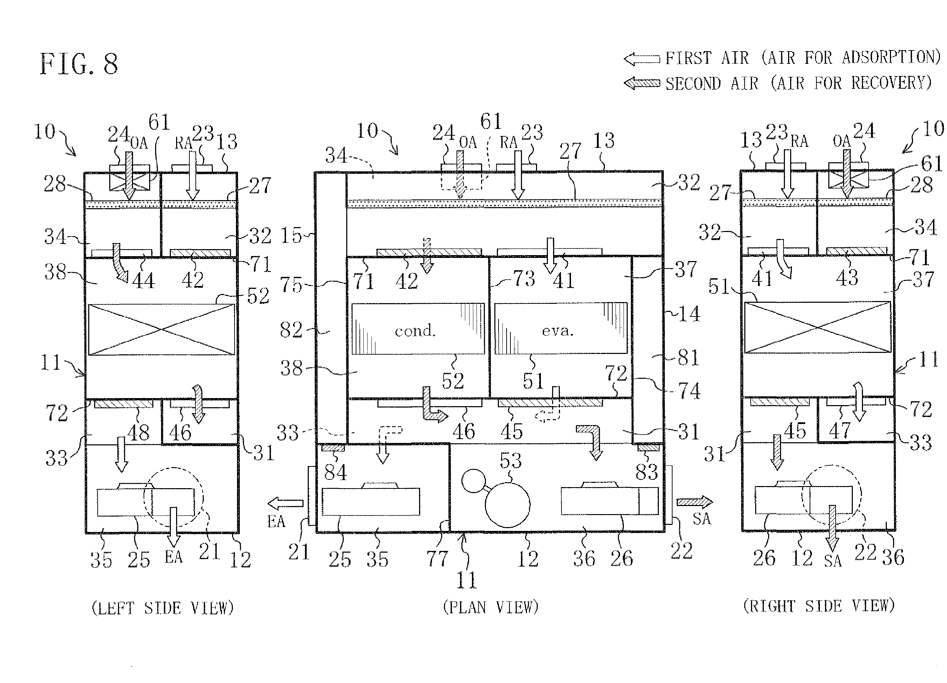

Next, the second process of the humidification operation will be described. As illustrated in FIG. 8, during the second process, the first room air damper (41), the second outdoor air damper (44), the second air supply damper (46), and the first air discharge damper (47) are opened; and the second room air damper (42), the first outdoor air damper (43), the first air supply damper (45), and the second air discharge damper (48) are closed. In the refrigerant circuit (50) which is in the second process, the first switching solenoid valve (62a) is opened, the second switching solenoid valve (62b) is closed. In addition, the four-way switching valve (54) is set to the second state (state indicated by the dashed line in FIG. 4). The first adsorption heat exchanger (51) serves as the evaporator, whereas the second adsorption heat exchanger (52) serves as the condenser.

The first air flowing into the room air path (32) and passing through the room air filter (27) flows into the first heat exchanger chamber (37) through the first room air damper (41), and then passes through the first adsorption heat exchanger (51). In the first adsorption heat exchanger (51), moisture in the first air is adsorbed to the adsorbent, and adsorption heat generated thereupon is absorbed by refrigerant. That is, in the first adsorption heat exchanger (51), the adsorption process is performed by the adsorbent. The first air from which moisture is removed in the first adsorption heat exchanger (51) flows into the air discharge path (33) through the first air discharge damper (47). After passing through the air discharge fan chamber (35), the first air is discharged to outside the room through the air discharge port (21).

Meanwhile, the second air (outdoor air) flows into the outdoor air path (34) through the outdoor air suction port (24) and the auxiliary heat exchanger (61). At this point, refrigerant does not circulate through the auxiliary heat exchanger (61), and therefore heat is not exchanged between the second air (outdoor air) and the refrigerant. The second air flowing into the outdoor air path (34) and passing through the outdoor air filter (28) flows into the second heat exchanger chamber (38) through the second outdoor air damper (44), and passes through the second adsorption heat exchanger (52). In the second adsorption heat exchanger (52), moisture is desorbed from the adsorbent heated by refrigerant, and the desorbed moisture is imparted to the second air. That is, in the second adsorption heat exchanger (52), the recovery process is performed by the adsorbent. The second air humidified in the second adsorption heat exchanger (52) flows into the air supply path (31) through the second air supply damper (46). After passing through the air supply fan chamber (36), the second air is supplied to the room through the air supply port (22).

A preheating process of the humidification operation under low external temperature environment (e.g., lower than or equal to 5°C below zero) during winter will be described. First, in the refrigerant circuit (50) which is in the first process, when the outdoor air temperature sensor (99) detects that an outdoor air temperature is lower than or equal to 5°C below zero, the controller (100) closes the first switching solenoid valve (62a), and opens the second switching solenoid valve (62b). In addition, the four-way switching valve (54) is set to the first state (state indicated by the solid line in FIG. 4). The first adsorption heat exchanger (51) serves as the condenser, whereas the second adsorption heat exchanger (52) serves as the evaporator. When high-pressure refrigerant is discharged from the compressor (53), such refrigerant circulates through the auxiliary circuit (60), and flows into the auxiliary heat exchanger (61). In the auxiliary heat exchanger (61), low-temperature outdoor air (second air) is heated by the refrigerant. The refrigerant passing through the auxiliary heat exchanger (61) flows out from the auxiliary circuit (60), and returns to the main circuit (50a).

During the first process, the second air (outdoor air) flows into the outdoor air path (34) through the outdoor air suction port (24) and the auxiliary heat exchanger (61). At this point, refrigerant circulates though the auxiliary heat exchanger (61), and therefore heat is exchanged between the refrigerant and the second air to heat the second air. Then, the second air preheated in the auxiliary heat exchanger (61) flows into the outdoor air path (34), and passes through the outdoor air filter (28). The second air flows into the first heat exchanger chamber (37) through the first outdoor air damper (43), and then passes through the first adsorption heat exchanger (51).

In the refrigerant circuit (50) which is in the second process, the first switching solenoid valve (62a) is closed, and the second switching solenoid valve (62b) is opened. In addition, the four-way switching valve (54) is set to the second state (state indicated by the dashed line in FIG. 4). The first adsorption heat exchanger (51) serves as the evaporator, whereas the second adsorption heat exchanger (52) serves as the condenser.

During the second process, the second air (outdoor air) flows into the outdoor air path (34) through the outdoor air suction port (24) and the auxiliary heat exchanger (61). At this point, refrigerant circulates through the auxiliary heat exchanger (61), and therefore heat is exchanged between the refrigerant and the second air to heat the second air. Then, the second air preheated in the auxiliary heat exchanger (61) flows into the outdoor air path (34), and passes through the outdoor air filter (28). The second air flows into the second heat exchanger chamber (38) through the second outdoor air damper (44), and then passes through the second adsorption heat exchanger (52).

In the first embodiment, the preheating process has been described, which is performed under the environment in which the external temperature is lower than or equal to 55°C below zero. However, the preheating process of the present invention may be controlled so as to be constantly performed during, e.g., the humidification operation.

### <Ventilation Operation>

Processes of the humidity control apparatus (10) during the ventilation operation will be described.

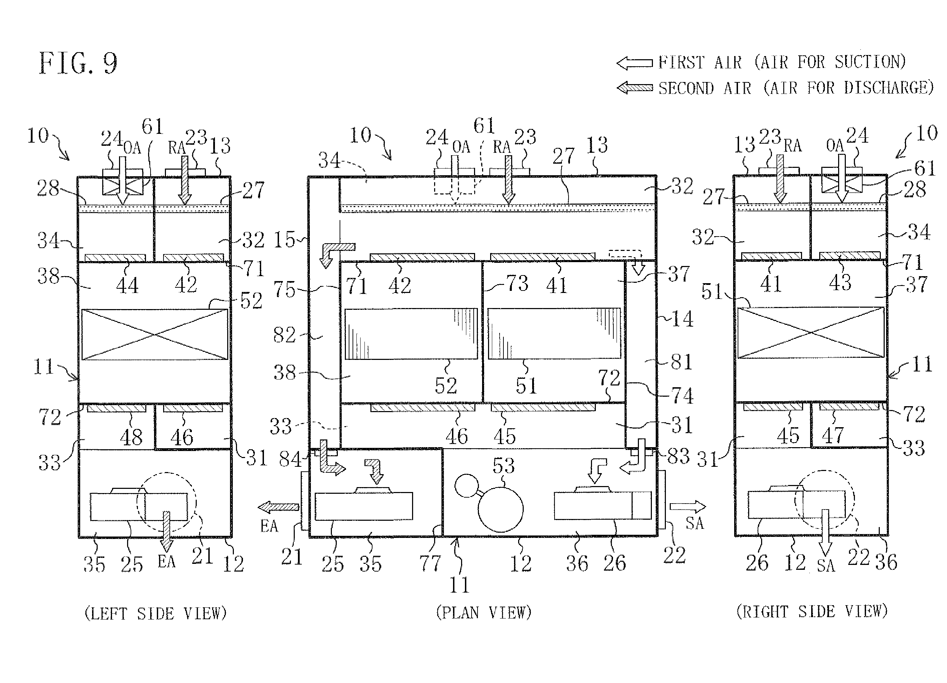

As illustrated in FIG. 9, in the humidity control apparatus (10) which is in the ventilation operation, the first bypass damper (83) and the second bypass damper (84) are opened; and the first room air damper (41), the second room air damper (42), the first outdoor air damper (43), the second outdoor air damper (44), the first air supply damper (45), the second air supply damper (46), the first air discharge damper (47), and the second air discharge damper (48) are closed. In addition, in the ventilation operation, the compressor (53) of the refrigerant circuit (50) is stopped.

In the humidity control apparatus (10) which is in the ventilation operation, outdoor air is taken into the casing (11) through the outdoor air suction port (24). The outdoor air flowing into the outdoor air path (34) through the outdoor air suction port (24) flows into the air supply fan chamber (36) through the first bypass path (81) and the first bypass damper (83). Then, the outdoor air passes through the air supply port (22), and is discharged to outside the room.

In the humidity control apparatus (10) which is in the ventilation operation, room air is taken into the casing (11) through the room air suction port (23). The room air flowing into the room air path (32) through the room air suction port (23) flows into the air discharge fan chamber (35) through the second bypass path (82) and the second bypass damper (84). Then, the room air passes through the air discharge port (21), and is discharged to outside the room.

### Advantages of First Embodiment

In the first embodiment, the circulation of high-pressure refrigerant flowing through the high-pressure line (50c) is switchable to the circulation through the auxiliary circuit (60). Thus, only when the preheating of the second air (outdoor air) to be supplied to the adsorption heat exchanger (51, 52) is required, the circulation of refrigerant flowing through the high-pressure line (50c) can be switched to the circulation through the auxiliary circuit (60). That is, when the temperature of the second air to be supplied to the adsorption heat exchanger (51, 52) is a normal temperature (temperature from an ordinary temperature to a high temperature), refrigerant circulates through the high-pressure line (50c) without preheating the second air. On the other hand, when the temperature of recovery air to be supplied to the adsorption heat exchanger (51, 52) is low, the refrigerant circulation is switched from the circulation through the main circuit (50a) to the circulation through the auxiliary circuit (60), thereby heating the recovery air. Thus, even when the temperature of the second air to be supplied to the adsorption heat exchanger (51, 52) is low, freezing of, e.g., the outdoor air path (34), the outdoor air filter (28), and the first outdoor air damper (43) through which the second air passes can be reduced or prevented. In addition, a temperature difference between the first air and the second air is narrowed, and therefore reduction or prevention of condensation in the first heat exchanger chamber (37) and the second heat exchanger chamber (38) when switching the damper can be ensured. Further, reduction or prevention of unnecessary heating in the auxiliary heat exchanger (61) can be ensured. Consequently, energy conservation of the humidity control apparatus (10) can be realized.

### <Second Embodiment of the Intention>

Next, a second embodiment will be described with reference to the drawings.

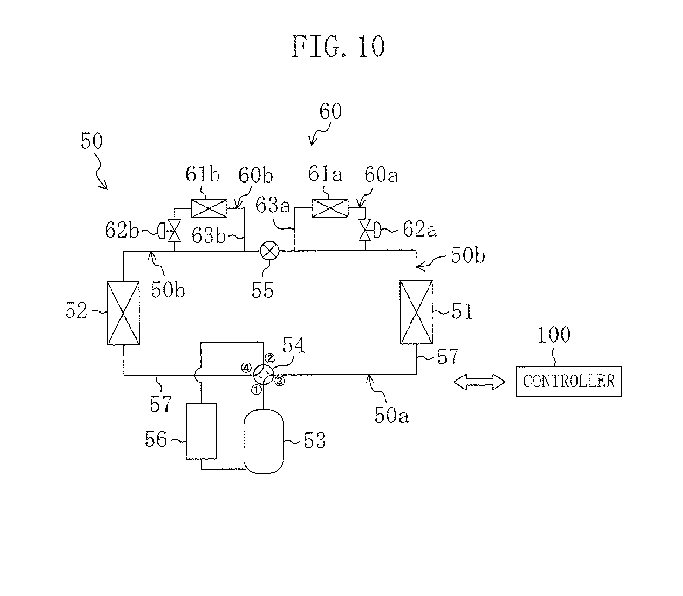

As illustrated in FIG. 10, in a humidity control apparatus (10) of the second embodiment, a configuration of an auxiliary circuit (60) in a refrigerant circuit (50) is different from that of the humidity control apparatus (10) of the first embodiment.

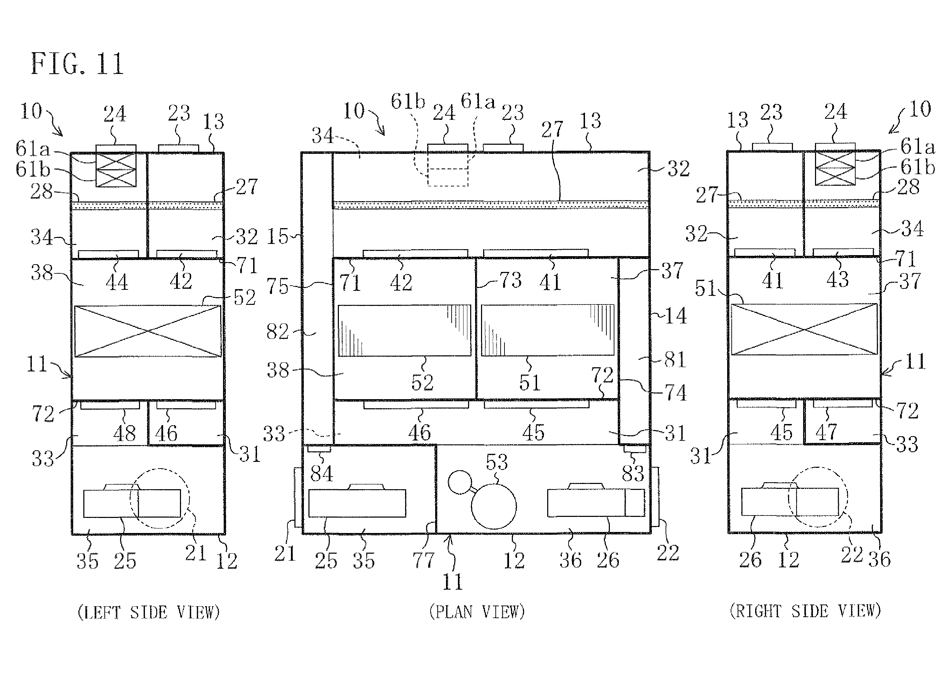

Specifically, as illustrated in FIG. 11, in the humidity control apparatus (10) of the second embodiment, an outdoor air path (34) communicates with an outdoor space through a duct, a first auxiliary heat exchanger (61a), and a second auxiliary heat exchanger (61b) which are connected to an outdoor air suction port (24). That is, outdoor air passing through the duct and discharged from the outdoor air suction port (24) necessarily passes through the first auxiliary heat exchanger (61a) and the second auxiliary heat exchanger (61b), and then flows into the outdoor air path (34). The refrigerant circuit (50) of the second embodiment includes a main circuit (50a) having a first adsorption heat exchanger (51), a second adsorption heat exchanger (52), a compressor (53), a four-way switching valve (54), and a main electric-operated expansion valve (55); and an auxiliary circuit (60) having the auxiliary heat exchangers (6 1 a, 6 1 b) and switching solenoid valves (62a, 62b).

The auxiliary circuit (60) includes a first auxiliary circuit (60a) and a second auxiliary circuit (60b) which are connected to the main circuit (50a).

In the first auxiliary circuit (60a), the first auxiliary heat exchanger (61a) and the first switching solenoid valve (62a) are connected to the main circuit (50a) through a first auxiliary refrigerant pipe (63a), and liquid refrigerant flowing out from the first adsorption heat exchanger (51) flows.

The first auxiliary refrigerant pipe (63a) is formed in tubular shape so that gas or liquid can circulate through the first auxiliary refrigerant pipe (63a), and both ends of the first auxiliary refrigerant pipe (63a) are connected to a liquid line (50b) between the first adsorption heat exchanger (51) and the main electric-operated expansion valve (55). The first auxiliary heat exchanger (61a) is connected in the middle of the first auxiliary refrigerant pipe (63a).

The first auxiliary heat exchanger (61a) is for condensing high-pressure refrigerant flowing through the first auxiliary refrigerant pipe (63a) (i.e., for dissipating heat from the refrigerant). The first auxiliary heat exchanger (61a) heats outdoor air by condensing liquid refrigerant flowing out from the first adsorption heat exchanger (51) and passing through the first auxiliary refrigerant pipe (63a).

The first switching solenoid valve (62a) serves as a refrigerant adjusting mechanism configured to switch refrigerant circulation so that liquid refrigerant flowing out from the first adsorption heat exchanger (51) flows into the first auxiliary circuit (60a). The first switching solenoid valve (62a) is an openable solenoid valve, and is provided on an upstream side of refrigerant circulation through the first auxiliary heat exchanger (61a).

In the second auxiliary circuit (60b), the second auxiliary heat exchanger (61b) and the second switching solenoid valve (62b) are connected to the main circuit (50a) through a second auxiliary refrigerant pipe (63b), and liquid refrigerant flowing out from the second adsorption heat exchanger (52) flows.

The second auxiliary refrigerant pipe (63b) is formed in tubular shape so that gas or liquid can circulate through the second auxiliary refrigerant pipe (63b), and both ends of the second auxiliary refrigerant pipe (63b) are connected to the liquid line (50b) between the second adsorption heat exchanger (52) and the main electric-operated expansion valve (55). The second auxiliary heat exchanger (61b) is connected in the middle of the second auxiliary refrigerant pipe (63b).

The second auxiliary heat exchanger (61b) is for condensing high-pressure refrigerant flowing through the second auxiliary refrigerant pipe (63b) (i.e., for dissipating heat from the refrigerant). The second auxiliary heat exchanger (61b) heats outdoor air by condensing liquid refrigerant flowing out from the second adsorption heat exchanger (52) and passing through the second auxiliary refrigerant pipe (63b).

The second switching solenoid valve (62b) serves as a refrigerant adjusting mechanism configured to switch refrigerant circulation so that liquid refrigerant flowing out from the second adsorption heat exchanger (52) flows into the second auxiliary circuit (60b). The second switching solenoid valve (62b) is an openable solenoid valve, and is provided on an upstream side of refrigerant circulation through the second auxiliary heat exchanger (61b).

A preheating process of a humidification operation of the second embodiment under low external temperature environment (e.g., lower than or equal to 5°C below zero) during winter will be described. First, in the refrigerant circuit (50) which is in a first process, when an outdoor air temperature sensor (99) detects that an outdoor air temperature is lower than or equal to 5°C below zero, a controller (100) opens the first switching solenoid valve (62a), and closes the second switching solenoid valve (62b). In addition, the four-way switching valve (54) is set to a first state (state indicated by a solid line in FIG. 10). The first adsorption heat exchanger (51) serves as a condenser, and the second adsorption heat exchanger (52) serves as an evaporator. When high-pressure refrigerant is discharged from the compressor (53), such refrigerant is condensed (i.e., dissipates heat) in the first adsorption heat exchanger (51). Then, the refrigerant flows into the first auxiliary circuit (60a), and passes through the first auxiliary heat exchanger (61a). In the first auxiliary heat exchanger (61a), heat is exchanged between the refrigerant flowing out from the first adsorption heat exchanger (51) and low-temperature second air (outdoor air). The refrigerant passing through the first auxiliary heat exchanger (61a) flows out from the first auxiliary circuit (60a), and returns to the main circuit (50a).

During the first process, the second air (outdoor air) flows into the outdoor air path (34) through the outdoor air suction port (24), the first auxiliary heat exchanger (61a), and the second auxiliary heat exchanger (61b). At this point, the refrigerant flowing out from the first adsorption heat exchanger (51) circulates through the first auxiliary heat exchanger (61a), and therefore heat is exchanged between the refrigerant and the second air (outdoor air) to heat the second air (outdoor air). Meanwhile, refrigerant does not circulate through the second auxiliary heat exchanger (61 b), and therefore heat is not exchanged between the refrigerant and the second air (outdoor air). The second air (outdoor air) preheated in the first auxiliary heat exchanger (61a) flows into the outdoor air path (34), and passes through an outdoor air filter (28). The second air flows into a first heat exchanger chamber (37) through a first outdoor air damper (43), and then passes through the first adsorption heat exchanger (51).

In the refrigerant circuit (50) which is in a second process, the first switching solenoid valve (62a) is closed, and the second switching solenoid valve (62b) is opened. In addition, the four-way switching valve (54) is set to a second state (state indicated by a dashed line in FIG. 10). The first adsorption heat exchanger (51) serves as the evaporator, whereas the second adsorption heat exchanger (52) serves as the condenser.

During the second process, the second air (outdoor air) flows into the outdoor air path (34) through the outdoor air suction port (24), the first auxiliary heat exchanger (61a), and the second auxiliary heat exchanger (61b). At this point, refrigerant does not circulate through the first auxiliary heat exchanger (61a), and therefore heat is not exchanged between the refrigerant and the second air (outdoor air). Meanwhile, the refrigerant flowing out from the second adsorption heat exchanger (52) circulates through the second auxiliary heat exchanger (61b), and therefore heat is exchanged between the refrigerant and the second air (outdoor air) to heat the second air (outdoor air). The second air preheated in the second auxiliary heat exchanger (61b) flows into the outdoor air path (34), and passes through the outdoor air filter (28). The second air flows into a second heat exchanger chamber (38) through a second outdoor air damper (44), and then passes through the second adsorption heat exchanger (52).

According to the second embodiment, the first auxiliary circuit (60a) and the second auxiliary circuit (60b) are connected to the liquid line (50b) of the main circuit (50a). Thus, only when the preheating of the second air (outdoor air) to be supplied to the adsorption heat exchanger (51, 52) is required, the circulation of refrigerant flowing through the main circuit (50a) can be switched to the circulation through the auxiliary circuit (60), and the second air can be heated by refrigerant condensed in the adsorption heat exchanger (51, 52). That is, heat remaining in refrigerant after the recovery process (i.e., condensation (or heat dissipation)) in the adsorption heat exchanger (51, 52) can be used to heat the second air. This allows an effective use of heat from refrigerant flowing through the refrigerant circuit (50), thereby realizing energy conservation of the humidity control apparatus (10). Other configurations, features, and advantages are similar to those of the first embodiment.

### <Third Embodiment of the Invention>

ext, a third embodiment will be described with reference to the drawings.

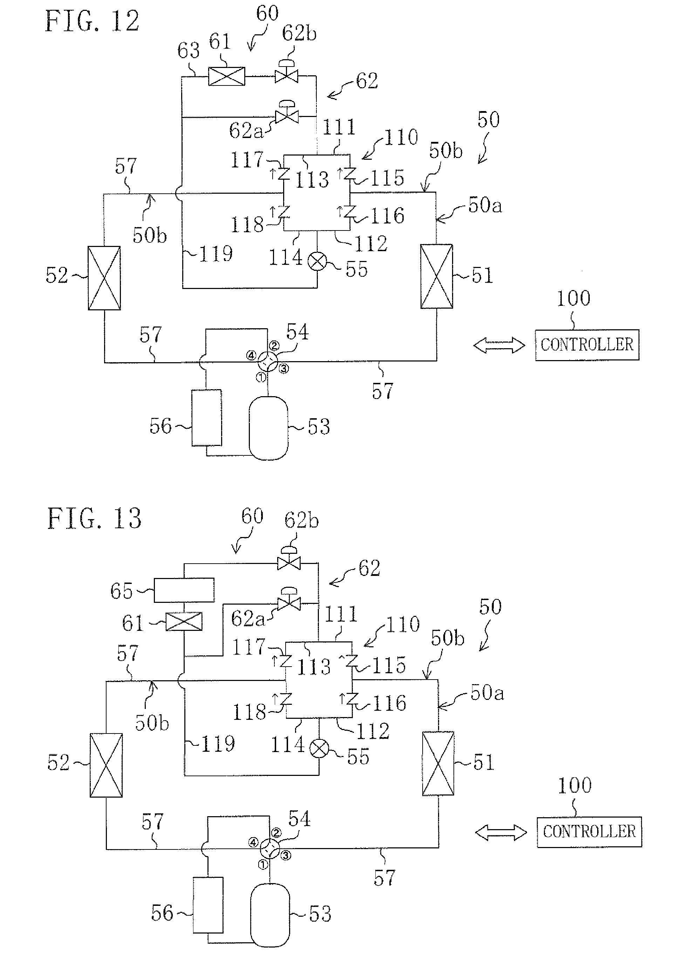

As illustrated in FIG. 12, in a humidity control apparatus (10) of the third embodiment, a configuration of an auxiliary circuit (60) in a refrigerant circuit (50) is different from that of the humidity control apparatus (10) of the first embodiment, and a bridge circuit (110) is provided in a main circuit (50a).

The bridge circuit (110) is for controlling a refrigerant flow depending on a switching state (first or second state) of a four-way switching valve (54) so that refrigerant circulating in any of forward and backward directions passes through a main electric-operated expansion valve (55) in one direction. The bridge circuit (110) is arranged between a first adsorption heat exchanger (51) and a second adsorption heat exchanger (52). The bridge circuit (110) includes first to fourth pipes (111, 112, 113, 114) connected together in bridge form; first to fourth check valves (115, 116, 117, 118) provided in the pipes (111, 112, 113, 114); and a one-way path (119) connecting an outflow side of the first pipe (111) and the third pipe (113) to an inflow side of the second pipe (112) and the fourth pipe (114). The one-way path (119) is a refrigerant path through which refrigerant flowing through the main circuit (50a) and condensed in the adsorption heat exchanger (51, 52) flows in one directions.

An inflow side of the first pipe (111) and an outflow side of the second pipe (112) are connected to the first adsorption heat exchanger (51). On the other hand, an inflow side of the third pipe (113) and an outflow side of the fourth pipe (114) are connected to the second adsorption heat exchanger (52). The inflow side of the second pipe (112) and the fourth pipe (114) is connected to an outflow side of the main electric-operated expansion valve (55). On the other hand, the outflow side of the first pipe (111) and the third pipe (113) is connected to an inflow side of the main electric-operated expansion valve (55).

The refrigerant circuit (50) of the third embodiment includes the main circuit (50a) having the first adsorption heat exchanger (51), the second adsorption heat exchanger (52), a compressor (53), the four-way switching valve (54), and the main electric-operated expansion valve (55); and the auxiliary circuit (60) having an auxiliary heat exchanger (61) and a switching solenoid valve (62).

In the auxiliary circuit (60), refrigerant flowing out from the first pipe (111) and the third pipe (113) to the one-way path (119) in the bridge circuit (110) flows. The auxiliary circuit (60) is formed by connecting the auxiliary heat exchanger (61) and the switching solenoid valve (62) through an auxiliary refrigerant pipe (63).

The auxiliary refrigerant pipe (63) is formed in tubular shape so that gas or liquid can circulate through the auxiliary refrigerant pipe (63). One end of the auxiliary refrigerant pipe (63) is connected to the outflow side of the first pipe (111) and the third pipe (113) in the one-way path (119), and the other end is connected to an inflow side of the one-way path (119) (i.e., connected to the main electric-operated expansion valve (55) in the one-way path (119)). That is, refrigerant condensed in the adsorption heat exchanger (51, 52) (i.e., refrigerant, heat of which is dissipated in the adsorption heat exchanger (51, 52)) flows into the auxiliary refrigerant pipe (63). The auxiliary heat exchanger (61) is connected in the middle of the auxiliary refrigerant pipe (63).

The auxiliary heat exchanger (61) is for condensing high-pressure refrigerant flowing through the auxiliary refrigerant pipe (63) (i.e., for dissipating heat from the refrigerant). The auxiliary heat exchanger (61) is provided in the auxiliary refrigerant pipe (63), and is configured so that outdoor air is heated by high-pressure refrigerant flowing out from the adsorption heat exchanger (51, 52) and flowing through the auxiliary refrigerant pipe (63).

The switching solenoid valve (62) serves as a refrigerant adjusting mechanism configured to switch refrigerant circulation so that, after circulating through the bridge circuit (110), refrigerant flowing out from the first pipe (111) and the third pipe (113) and flowing through the main circuit (50a) of the one-way path (119) flows into the auxiliary circuit (60). The switching solenoid valve (62) is an openable solenoid valve. In the refrigerant circuit (50) of the third embodiment, a first switching solenoid valve (62a) and a second switching solenoid valve (62b) are provided. An opening/closing of the switching solenoid valve (62a, 62b) is controlled by a controller (100). In the one-way path (119) connecting the outflow side of the first pipe (111) and the third pipe (113) to the main electric-operated expansion valve (55), the first switching solenoid valve (62a) is provided between a position where one end of the auxiliary refrigerant pipe (63) is connected to the one-way path (119), and a position where the other end is connected to the one-way path (119). The second switching solenoid valve (62b) is provided on an upstream side of the auxiliary heat exchanger (61) of the auxiliary circuit (60) in a refrigerant flow. As illustrated in FIG. 13, a receiver (65) configured to store condensed liquid refrigerant may be provided between the auxiliary heat exchanger (61) and the second switching solenoid valve (62b) in the refrigerant circuit (50) of the third embodiment. The receiver (65) is a hollow container formed in vertical cylindrical shape, and serves as a noise canceling unit of the present invention. In an internal space of the receiver (65), operating noise of the check valves (115, 116, 117, 118) of the bridge circuit (110) is cancelled, which is caused when switching between first and second processes. This allows a quiet operation of the humidity control apparatus (10).

A preheating process of a humidification operation of the third embodiment under low external temperature environment (e.g., lower than or equal to 5°C below zero) during winter will be described. First, in the refrigerant circuit (50) which is in the first process, when an outdoor air temperature sensor (99) detects that an outdoor air temperature is lower than or equal to 5°C below zero, a controller (100) closes the first switching solenoid valve (62a), and opens the second switching solenoid valve (62b). In addition, the four-way switching valve (54) is set to the first state (state indicated by a solid line in FIG. 12). The first adsorption heat exchanger (51) serves as a condenser, whereas the second adsorption heat exchanger (52) serves as an evaporator. When high-pressure refrigerant is discharged from the compressor (53), such refrigerant is condensed in the first adsorption heat exchanger (51), and then flows into the bridge circuit (110). The refrigerant flows out from the first pipe (111) to the one-way path (119) in the bridge circuit (110). Then, the refrigerant flows into the auxiliary circuit (60), and passes through the auxiliary heat exchanger (61). In the auxiliary heat exchanger (61), heat is exchanged between the refrigerant and low-temperature outdoor air (second air). The refrigerant passing through the auxiliary heat exchanger (61) flows out from the auxiliary circuit (60), and returns to the main circuit (50a).

During the first process, the second air (outdoor air) flows into an outdoor air path (34) through an outdoor air suction port (24) and the auxiliary heat exchanger (61). At this point, refrigerant circulates through the auxiliary heat exchanger (61), and therefore heat is exchanged between the refrigerant and the second air (outdoor air) to heat the second air (outdoor air). The second air (outdoor air) preheated in the auxiliary heat exchanger (61) flows into the outdoor air path (34), and passes through an outdoor air filter (28). The second air flows into a first heat exchanger chamber (37) through a first outdoor air damper (43), and then passes through the first adsorption heat exchanger (51).

As in the first process, in the refrigerant circuit (50) which is in the second process, the controller (100) closes the first switching solenoid valve (62a), and opens the second switching solenoid valve (62b). In addition, the four-way switching valve (54) is set to the second state (state indicated by a dashed line in FIG. 12). The first adsorption heat exchanger (51) serves as the evaporator, whereas the second adsorption heat exchanger (52) serves as the condenser. When high-pressure refrigerant is discharged from the compressor (53), the refrigerant is condensed in the second adsorption heat exchanger (52), and flows into the bridge circuit (110). The refrigerant flows out from the first pipe (111) and the third pipe (113) to the one-way path (119) in the bridge circuit (110). Then, the refrigerant flows into the auxiliary circuit (60), and passes through the auxiliary heat exchanger (61). In the auxiliary heat exchanger (61), heat is exchanged between the refrigerant and low-temperature outdoor air (second air). The refrigerant passing through the auxiliary heat exchanger (61) flows out from the auxiliary circuit (60), and returns to the main circuit (50a).

According to the third embodiment, the bridge circuit (110) is provided in a liquid line (50b) of the main circuit (50a), and therefore refrigerant can flow into the main electric-operated expansion valve (55) in one direction. On the other hand, the circulation of refrigerant flowing through the one-way path (119) of the bridge circuit (110) is switched to the circulation through the auxiliary circuit (60), and therefore refrigerant can pass through the auxiliary circuit (60) in one direction. That is, a flow of refrigerant passing through the auxiliary circuit (60) is not reversibly switched, and therefore the auxiliary heat exchanger (61) may be provided only on an upstream side of the main electric-operated expansion valve (55) in the refrigerant flow direction. This simplifies the configuration of the auxiliary circuit (60), thereby reducing a manufacturing cost of the humidity control apparatus (10).

### <Fourth Embodiment of the Invention>

Next, a fourth embodiment will be described with reference to the drawings.

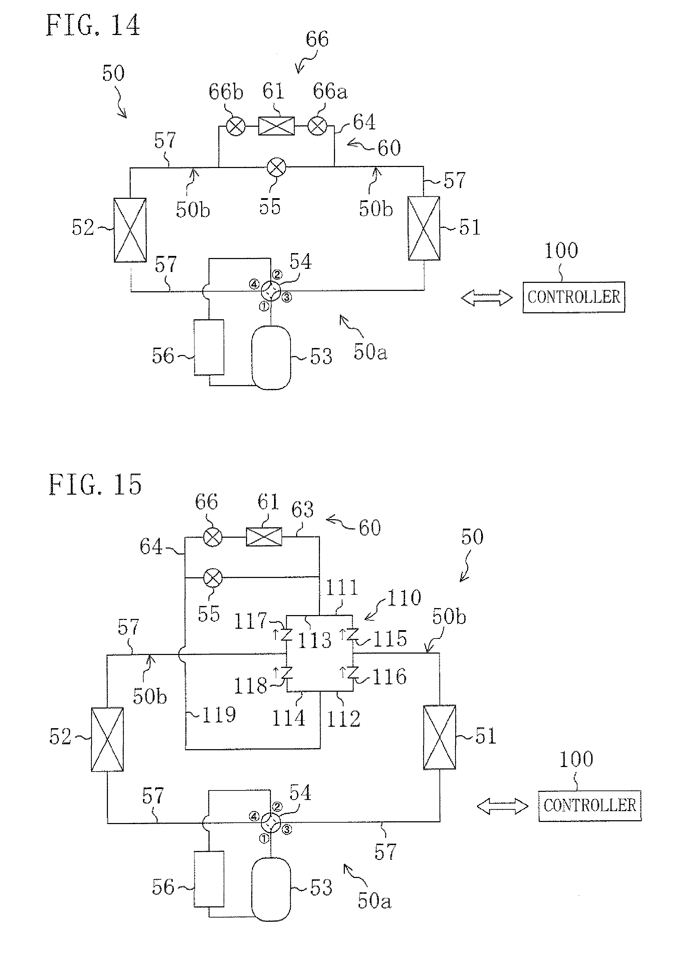

As illustrated in FIG. 14, in a humidity control apparatus (10) of the fourth embodiment, a configuration of an auxiliary circuit (60) in a refrigerant circuit (50) is different from that of the humidity control apparatus (10) of the first embodiment.

Specifically, the refrigerant circuit (50) of the fourth embodiment includes a main circuit (50a) having a first adsorption heat exchanger (51), a second adsorption heat exchanger (52), a compressor (53), a four-way switching valve (54), and a main electric-operated expansion valve (55); and an expansion bypass line (64) having an auxiliary heat exchanger (61) and an auxiliary expansion valve (66).

The expansion bypass line (64) is for bypassing high-pressure refrigerant flowing out from the adsorption heat exchanger (51, 52), from the main electric-operated expansion valve (55); and serves as an auxiliary circuit. The expansion bypass line (64) is formed in tubular shape so that gas or liquid can circulate through the expansion bypass line (64). One end of the expansion bypass line (64) is connected between the first adsorption heat exchanger (51) and the main electric-operated expansion valve (55), and the other end is connected between the second adsorption heat exchanger (52) and the main electric-operated expansion valve (55). A first auxiliary expansion valve (66a), the auxiliary heat exchanger (61), and a second auxiliary expansion valve (66b) are connected in the middle of the expansion bypass line (64) in this order.

The auxiliary heat exchanger (61) is for condensing high-pressure refrigerant flowing through the expansion bypass line (64) (i.e., for dissipating heat from the refrigerant). The auxiliary heat exchanger (61) is provided in the expansion bypass line (64), and heats outdoor air by high-pressure refrigerant flowing out from the adsorption heat exchanger (51, 52).

The auxiliary expansion valve (66) is an auxiliary expansion mechanism configured to expand refrigerant flowing out from the auxiliary heat exchanger (61) of the expansion bypass line (64), and serves as a refrigerant adjusting mechanism. The auxiliary expansion valve (66) includes the first auxiliary expansion valve (66a) and the second auxiliary expansion valve (66b). The first auxiliary expansion valve (66a) is provided on an upstream side of a flow of high-pressure refrigerant flowing out from the first adsorption heat exchanger (51). The second auxiliary expansion valve (66b) is provided on an upstream side of a flow of high-pressure refrigerant flowing out from the second adsorption heat exchanger (52).

A preheating process of a humidification operation of the fourth embodiment under low external temperature environment (e.g., lower than or equal to 5°C below zero) during winter will be described. First, in the refrigerant circuit (50) which is in a first process, when an outdoor air temperature sensor (99) detects that an outdoor air temperature is lower than or equal to 5°C below zero, a controller (100) fully closes the main electric-operated expansion valve (55), and fully opens the first auxiliary expansion valve (66a). In addition, the controller (100) opens the second auxiliary expansion valve (66b). The four-way switching valve (54) is set to a first state (state indicated by a solid line in FIG. 14). The first adsorption heat exchanger (51) serves as a condenser, whereas the second adsorption heat exchanger (52) serves as an evaporator. When high-pressure refrigerant is discharged from the compressor (53), such refrigerant is condensed in the first adsorption heat exchanger (51), and then flows into the expansion bypass line (64). The refrigerant flows into the auxiliary heat exchanger (61) through the expansion bypass line (64). In the auxiliary heat exchanger (61), heat is exchanged between the refrigerant and low-temperature outdoor air (second air). The refrigerant passing through the auxiliary heat exchanger (61) flows out from the expansion bypass line (64), and returns to the main circuit (50a).

During the first process, the second air (outdoor air) flows into an outdoor air path (34) through an outdoor air suction port (24) and the auxiliary heat exchanger (61). At this point, high-pressure refrigerant circulates through the auxiliary heat exchanger (61), and therefore heat is exchanged between the refrigerant and the second air (outdoor air) to heat the second air (outdoor air). The second air (outdoor air) preheated in the auxiliary heat exchanger (61) flows into the outdoor air path (34), and passes through an outdoor air filter (28). The second air flows into a first heat exchanger chamber (37) through a first outdoor air damper (43), and then passes through the first adsorption heat exchanger (51).

In the refrigerant circuit (50) which is in a second process, the main electric-operated expansion valve (55) is fully closed. In addition, the first auxiliary expansion valve (66a) is opened, whereas the second auxiliary expansion valve (66b) is fully opened. The four-way switching valve (54) is set to a second state (state indicated by a dashed line in FIG. 14). The first adsorption heat exchanger (51) serves as the evaporator, whereas the second adsorption heat exchanger (52) serves as the condenser. When high-pressure refrigerant is discharged from the compressor (53), the refrigerant is condensed in the second adsorption heat exchanger (52), and then flows into the expansion bypass line (64). The refrigerant passes through the expansion bypass line (64), and flows into the auxiliary heat exchanger (61). In the auxiliary heat exchanger (61), heat is exchanged between the refrigerant and low-temperature outdoor air (second air). The refrigerant passing through the auxiliary heat exchanger (61) flows out from the expansion bypass line (64), and returns to the main circuit (50a).

During the second process, the second air (outdoor air) flows into the outdoor air path (34) through the outdoor air suction port (24) and the auxiliary heat exchanger (61). At this point, high-pressure refrigerant circulates through the auxiliary heat exchanger (61), and therefore heat is exchanged between the refrigerant and the second air (outdoor air) to heat the second air (outdoor air). The second air (outdoor air) preheated in the auxiliary heat exchanger (61) flows into the outdoor air path (34), and passes through the outdoor air filter (28). The second air flows into a second heat exchanger chamber (38) through a second outdoor air damper (44), and then passes through the second adsorption heat exchanger (52).

According to the fourth embodiment, the humidity control apparatus (10) includes the expansion bypass line (64) configured to bypass the main electric-operated expansion valve (55) of the main circuit (50a); the auxiliary heat exchanger (61); and the first auxiliary expansion valve (66a) and the second auxiliary expansion valve (66b) provided on a downstream side of the expansion bypass line (64) in a refrigerant flow. Thus, only when the preheating of the second air (outdoor air) to be supplied to the adsorption heat exchanger (51, 52) is required, refrigerant circulating through the main circuit (50a) can be switched to flow through the expansion bypass line (64). That is, when the temperature of the second air to be supplied to the adsorption heat exchanger (51, 52) is a normal temperature (temperature from an ordinary temperature to a high temperature), refrigerant circulates through the main circuit (50a) without preheating the second air. On the other hand, when the temperature of the second air to be supplied to the adsorption heat exchanger (51, 52) is a low temperature, the refrigerant circulation is switched to the circulation through the expansion bypass line (64), thereby preheating the second air. Thus, even when the temperature of the second air to be supplied to the adsorption heat exchanger (51, 52) is low, freezing of, e.g., the outdoor air path (34), the outdoor air filter (28), and the first outdoor air damper (43) through which the second air passes can be reduced or prevented. In addition, a temperature difference between the first air and the second air is narrowed, and therefore reduction or prevention of condensation in the first heat exchanger chamber (37) or the second heat exchanger chamber (38) when switching the damper can be ensured. Further, reduction or prevention of unnecessary heating in the auxiliary heat exchanger (61) can be ensured. Consequently, energy conservation of the humidity control apparatus (10) can be realized. Other configurations, features, and advantages are similar to those of the first embodiment.

### <Fifth Embodiment off the Invention>

Next, a fifth embodiment will be described with reference to the drawings.

As illustrated in FIG. 15, in a humidity control apparatus (10) of the fifth embodiment, a bridge circuit (110) is provided in the liquid line (50b) of the main circuit (50a) of the humidity control apparatus (10) of the fourth embodiment.

The bridge circuit (110) is for controlling a refrigerant flow depending on a switching state (first or second state) of a four-way switching valve (54) so that refrigerant circulating in any of forward and backward directions passes through a main electric-operated expansion valve (55) in one direction. The bridge circuit (110) is arranged in the liquid line (50b) between a first adsorption heat exchanger (51) and a second adsorption heat exchanger (52). The bridge circuit (110) includes first to fourth pipes (111, 112, 113, 114) connected together in bridge form; first to fourth check valves (115, 116, 117, 118) provided in the pipes (111, 112, 113, 114); and a one-way path (119) connecting an outflow side of the first pipe (111) and the third pipe (113) to an inflow side of the second pipe (112) and the fourth pipe (114). The one-way path (119) is a refrigerant path through which refrigerant flowing through the main circuit (50a) and condensed in the adsorption heat exchanger (51, 52) flows in one direction.

An inflow side of the first pipe (111) and an outflow side of the second pipe (112) are connected to the first adsorption heat exchanger (51), On the other hand, an inflow side of the third pipe (113) and an outflow side of the fourth pipe (114) are connected to the second adsorption heat exchanger (52). The inflow side of the second pipe (112) and the fourth pipe (114) is connected to an outflow side of the main electric-operated expansion valve (55). On the other hand, the outflow side of the first pipe (111) and the third pipe (113) is connected to an inflow side of the main electric-operated expansion valve (55).

The expansion bypass line (64) is for bypassing refrigerant flowing through the one-way path (119) of the bridge circuit (110) from the main electric-operated expansion valve (55), and serves as an auxiliary circuit. One end of the expansion bypass line (64) is connected between the outflow side of the first pipe (111) and the third pipe (113) of the bridge circuit (110), and the main electric-operated expansion valve (55); and the other end is connected between the inflow side of the second pipe (112) and the fourth pipe (114) of the bridge circuit (110), and the main electric-operated expansion valve (55). An auxiliary heat exchanger (61) is provided in the middle of the expansion bypass line (64), and an auxiliary expansion valve (66) is connected to a downstream side of the auxiliary heat exchanger (61) in a refrigerant flow.

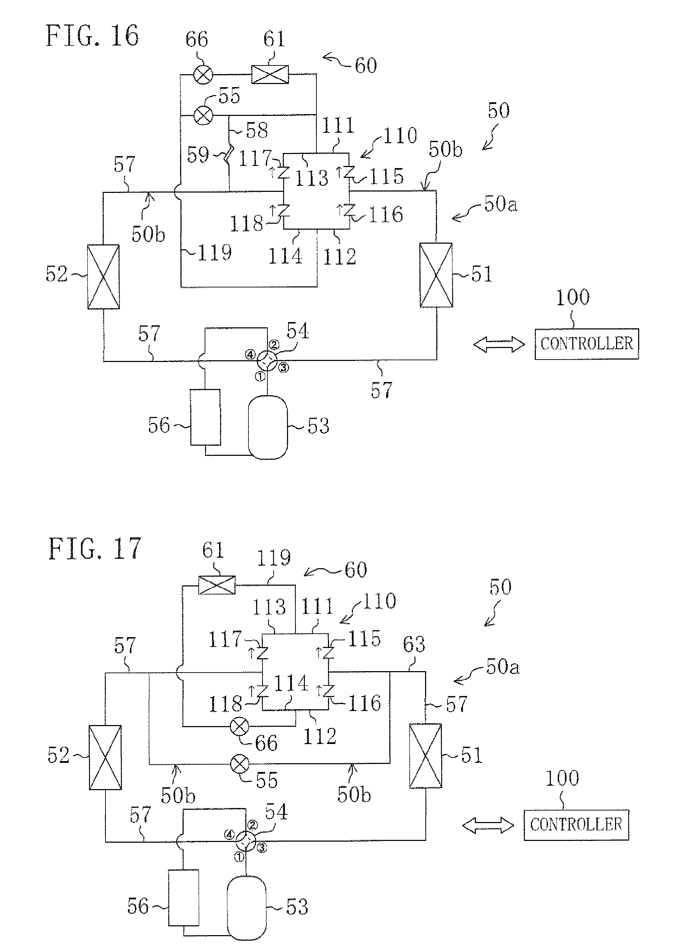

In the fifth embodiment, as illustrated in FIG. 16, an auxiliary line (58) may be provided, which connects between the inflow side of the main electric-operated expansion valve (55) and the inflow side of the third pipe (113) in the main circuit (50a). The auxiliary line (58) is formed in tubular shape so that gas or liquid can circulate through the auxiliary line (58), and a part of the auxiliary line (58) is formed as a capillary tube (59). That is, condensed liquid refrigerant accumulated between the inflow side of the main electric-operated expansion valve (55) and an outflow side of the check valve (115, 117) can be returned to the inflow side of the third pipe (113) of the bridge circuit (110).

A preheating process of a humidification operation of the fifth embodiment under low external temperature environment (e.g., lower than or equal to 5°C below zero) during winter will be described. First, in the refrigerant circuit (50) which is in a first process, when an outdoor air temperature sensor (99) detects that an outdoor air temperature is lower than or equal to 5°C below zero, a controller (100) fully closes the main electric-operated expansion valve (55), and opens the auxiliary expansion valve (66). In addition, the four-way switching valve (54) is set to the first state (state indicated by a solid line in FIG. 15). The first adsorption heat exchanger (51) serves as a condenser, whereas the second adsorption heat exchanger (52) serves as an evaporator. When high-pressure refrigerant is discharged from a compressor (53), such refrigerant is condensed in the first adsorption heat exchanger (51), and then flows from the first pipe (111) to the one-way path (119) in the bridge circuit (110). Subsequently, the refrigerant flows into the expansion bypass line (64). The refrigerant flows into the auxiliary heat exchanger (61) while passing through the expansion bypass line (64). In the auxiliary heat exchanger (61), heat is exchanged between the refrigerant and low-temperature outdoor air (second air). The refrigerant passing through the auxiliary heat exchanger (61) flows out from the expansion bypass line (64), and returns to the main circuit (50a).

In the refrigerant circuit (50) which is in a second process, the controller (100) fully closes the main electric-operated expansion valve (55), and fully opens the auxiliary expansion valve (66). In addition, the four-way switching valve (54) is set to the second state (state indicated by a dashed line in FIG. 15). The first adsorption heat exchanger (51) serves as the evaporator, whereas the second adsorption heat exchanger (52) serves as the condenser. When high-pressure refrigerant is discharged from the compressor (53), the refrigerant is condensed in the second adsorption heat exchanger (52), and then flows from the third pipe (113) to the one-way path (119) in the bridge circuit (110). Subsequently, the refrigerant flows into the expansion bypass line (64). The refrigerant flows into the auxiliary heat exchanger (61) while passing through the expansion bypass line (64). In the Auxiliary heat exchanger (61), heat is exchanged between the refrigerant and low-temperature outdoor air (second air). The refrigerant passing through the auxiliary heat exchanger (61) flows out from the expansion bypass line (64), and returns to the main circuit (50a).

According to the fifth embodiment, the bridge circuit (110) is provided in the liquid line (50b) of the main circuit (50a), and the main electric-operated expansion valve (55) is arranged in the one-way path (119) of the bridge circuit (110). Further, the expansion bypass line (64) configured to bypass the main electric-operated expansion valve (55) is provided. Thus, refrigerant passing through the main electric-operated expansion valve (55) can constantly flow in one direction, and refrigerant passing through the expansion bypass line (64) can flow in one direction. That is, a flow of refrigerant passing through the expansion bypass line (64) is not reversibly switched, and therefore the auxiliary expansion valve (66) may be provided only on a downstream side of the auxiliary heat exchanger (61) in the refrigerant flow direction. This simplifies the auxiliary expansion valve (66), thereby reducing a manufacturing cost of the humidity control apparatus (10).

The auxiliary line (58) is provided, which connects the inflow side of the main electric-operated expansion valve (55) of the one-way path (119) of the bridge circuit (110) to the liquid line (50b) provided between the bridge circuit (110) and the second adsorption heat exchanger (52); and which includes the capillary tube (59). Thus, liquid refrigerant accumulated between the inflow side of the main electric-operated expansion valve (55) and the outflow side of the check valve (115, 117) can be returned to the main circuit (50a) side. This ensures reduction or prevention of accumulation of a large amount of liquid refrigerant, i.e., liquid sealing on the inflow side of the main electric-operated expansion valve (55). Other configurations, features, and advantages are similar to those of the fourth embodiment.

### <Sixth Embodiment of the Invention>

As illustrated in FIG. 17, in a humidity control apparatus (10) of a sixth embodiment, a bridge circuit (110) is provided in an expansion bypass line (64) instead of the refrigerant circuit (50) of the humidity control apparatus (10) of the fifth embodiment.

The expansion bypass line (64) is for bypassing a main electric-operated expansion valve (55) of a main circuit (50a), and serves as an auxiliary circuit. One end of the expansion bypass line (64) is connected between a first adsorption heat exchanger (51) and the main electric-operated expansion valve (55), and the other end is connected between a second adsorption heat exchanger (52) and the main electric-operated expansion valve (55).

The bridge circuit (110) is for controlling a refrigerant flow depending on a switching state (first or second state) of a four-way switching valve (54) so that refrigerant circulating in any of forward and backward directions passes through an auxiliary expansion valve (66) in one direction. Specifically, the bridge circuit (110) is arranged in the expansion bypass line (64). The bridge circuit (110) includes first to fourth pipes (111, 112, 113, 114) connected together in bridge form; first to fourth check valves (115, 116, 117, 118) provided in the pipes (111, 112, 113, 114); and a one-way path (119) connecting an outflow side of the first pipe (111) and the third pipe (113) to an inflow side of the second pipe (112) and the fourth pipe (114). The one-way path (119) is a refrigerant path through which refrigerant flowing through the expansion bypass line (64) flows in one direction.

An inflow side of the first pipe (111) and an outflow side of the second pipe (112) are connected to one end side of the expansion bypass line (64). On the other hand, an inflow side of the third pipe (113) and an outflow side of the fourth pipe (114) are connected to the other end side of the expansion bypass line (64). The inflow side of the second pipe (112) and the fourth pipe (114) is connected to an outflow side of the main electric-operated expansion valve (55). On the other hand, the outflow side of the first pipe (111) and the third pipe (113) is connected to an inflow side of the main electric-operated expansion valve (55).

The auxiliary heat exchanger (61) is provided in the one-way path (119), and condenses refrigerant flowing out from the first pipe (111) and the third pipe (113) of the bridge circuit (110) (i.e., dissipates heat from the refrigerant).

The auxiliary expansion valve (66) is provided on a downstream side of the auxiliary heat exchanger (61) in the one-way path (119), and expands refrigerant flowing out from the auxiliary heat exchanger (61).

A preheating process of a humidification operation of the sixth embodiment under low external temperature environment (e.g., lower than or equal to 5°C below zero) during winter will be described. First, in the refrigerant circuit (50) which is in a first process, when an outdoor air temperature sensor (99) detects that an outdoor air temperature is lower than or equal to 5°C below zero, a controller (100) fully closes the main electric-operated expansion valve (55), and opens the auxiliary expansion valve (66). In addition, the controller (100) opens the check valves (115, 116, 117, 118) of the bridge circuit (110). The four-way switching valve (54) is set to the first state (state indicated by a solid line in FIG. 17). The first adsorption heat exchanger (51) serves as a condenser, whereas the second adsorption heat exchanger (52) serves as an evaporator. When high-pressure refrigerant is discharged from a compressor (53), such refrigerant is condensed in the first adsorption heat exchanger (51), and then flows into the expansion bypass line (64). Subsequently, the refrigerant flows into the bridge circuit (110) in the middle of the expansion bypass line (64). The refrigerant flows out from the first pipe (111) of the bridge circuit (110), and flows into the auxiliary heat exchanger (61). In the auxiliary heat exchanger (61), heat is exchanged between the refrigerant and low-temperature outdoor air (second air). The refrigerant passing through the auxiliary heat exchanger (61) is expanded by the auxiliary expansion valve (66) of the expansion bypass line (64). Then, the refrigerant passes through the fourth pipe (114) of the bridge circuit (110), and returns to the main circuit (50a).

In the refrigerant circuit (50) which is in a second process, the controller (100) fully closes the main electric-operated expansion valve (55), and fully opens the auxiliary expansion valve (66). In addition, the controller (100) opens the check valves (115, 116, 117, 118) of the bridge circuit (110). The four-way switching valve (54) is set to the second state (state indicated by a dashed line in FIG. 17). The first adsorption heat exchanger (51) serves as the evaporator, whereas the second adsorption heat exchanger (52) serves as the condenser. When high-pressure refrigerant is discharged from the compressor (53), the refrigerant is condensed in the second adsorption heat exchanger (52), and then flows into the expansion bypass line (64). Subsequently, the refrigerant passes through the expansion bypass line (64), and flows into the bridge circuit (110). The refrigerant flows out from the third pipe (113) of the bridge circuit (110), and flows into the auxiliary heat exchanger (61). In the auxiliary heat exchanger (61), heat is exchanged between the refrigerant and low-temperature outdoor air (second air). The refrigerant passing through the auxiliary heat exchanger (61) is expanded by the auxiliary expansion valve (66) of the expansion bypass line (64). Then, the refrigerant passes through the second pipe (112) of the bridge circuit (110), and returns to the main circuit (50a).

According to the sixth embodiment, the bridge circuit (110) is provided in the expansion bypass line (64) so that refrigerant passing through the expansion bypass line (64) flows in one direction. Thus, refrigerant flowing into the auxiliary expansion valve (66) of the expansion bypass line (64) can flow in one direction. That is, a flow of refrigerant passing through the auxiliary expansion valve (66) is not reversibly switched, and therefore the auxiliary expansion valve (66) may be provided only on the downstream side of the auxiliary heat exchanger (61) in the refrigerant flow direction. This simplifies the auxiliary circuit (60), thereby reducing a manufacturing cost of the humidity control apparatus (10). Other configurations, features, and advantages are similar to those of the fifth embodiment.

### <Seventh Embodiment of the Invention>

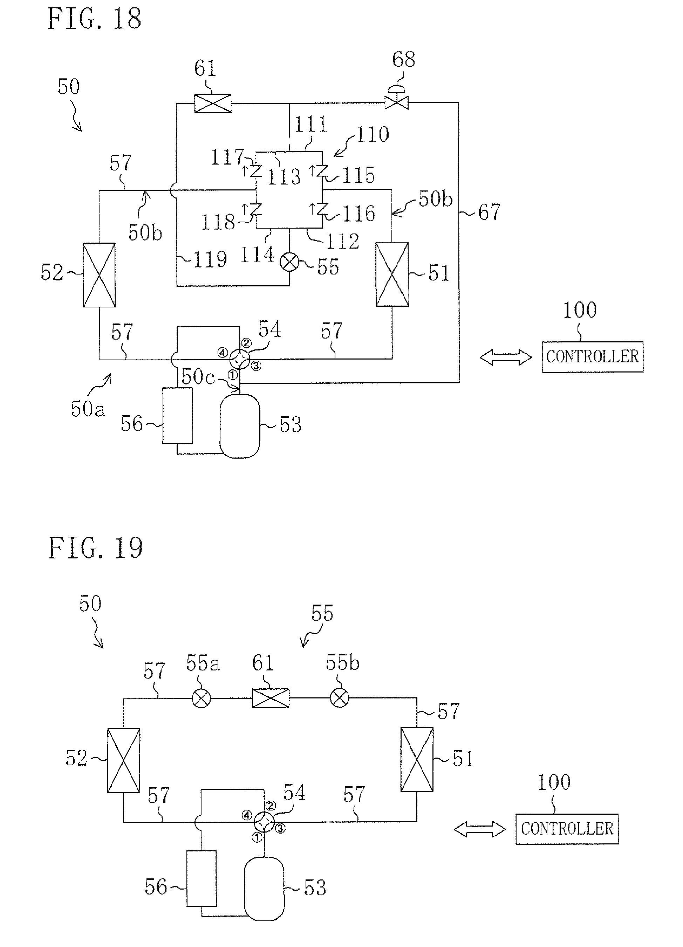

As illustrated in FIG. 18, a humidity control apparatus (10) of a seventh embodiment includes a refrigerant circuit (50) having a main circuit (50a), a heat exchange bypass line (67), and a bridge circuit (110) instead of the refrigerant circuit (50) of the humidity control apparatus (10) of the first embodiment.

The bridge circuit (110) is for controlling a refrigerant flow depending on a switching state (first or second state) of a four-way switching valve (54) so that refrigerant circulating in any of forward and backward directions passes through a main electric-operated expansion valve (55) in one direction. Specifically, the bridge circuit (110) is arranged between a first adsorption heat exchanger (51) and a second adsorption heat exchanger (52). The bridge circuit (110) includes first to fourth pipes (111, 112, 113, 114) connected together in bridge form; first to fourth check valves (115, 116, 117, 118) provided in the pipes (111, 112, 113, 114); and a one-way path (119) connecting an outflow side of the first pipe (111) and the third pipe (113) to an inflow side of the second pipe (112) and the fourth pipe (114). The one-way path (119) is a refrigerant path through which refrigerant flowing through the main circuit (50a) flows in one direction.

An inflow side of the first pipe (111) and an outflow side of the second pipe (112) are connected to the first adsorption heat exchanger (51). On the other hand, an inflow side of the third pipe (113) and an outflow side of the fourth pipe (114) are connected to the second adsorption heat exchanger (52). The inflow side of the second pipe (112) and the fourth pipe (114) is connected to an outflow side of the main electric-operated expansion valve (55). On the other hand, the outflow side of the first pipe (111) and the third pipe (113) is connected to an inflow side of an auxiliary heat exchanger (61).

The auxiliary heat exchanger (61) is provided between the outflow side of the first pipe (111) and the third pipe (113) of the bridge circuit (110), and the main electric-operated expansion valve (55). In the auxiliary heat exchanger (61), heat is exchanged between refrigerant which is condensed and dissipates heat in the first adsorption heat exchanger (51) or the second adsorption heat exchanger (52), and outdoor air.

The heat exchange bypass line (67) bypasses refrigerant discharge from a compressor (53), from the first and second adsorption heat exchangers (51, 52) so that the refrigerant directly flows into the auxiliary heat exchanger (61). The heat exchange bypass line (67) is formed in tubular shape so that gas or liquid can circulate through the heat exchange bypass line (67). One end of the heat exchange bypass line (67) is connected to a discharge side of the compressor (53), and the other end is connected to the inflow side of the auxiliary heat exchanger (61) in the one-way path (119) of the bridge circuit (110). An auxiliary solenoid valve (68) is connected in the middle of the heat exchange bypass line (67).

A preheating process of a humidification operation of the seventh embodiment under low external temperature environment (e.g., lower than or equal to 5°C below zero) during winter will be described. First, in the refrigerant circuit (50) which is in a first process, when an outdoor air temperature sensor (99) detects that an outdoor air temperature is lower than or equal to 5°C below zero, a controller (100) opens the auxiliary solenoid valve (68). In addition, the four-way switching valve (54) is set to the first state (state indicated by a solid line in FIG. 18). The first adsorption heat exchanger (51) serves as a condenser, whereas the second adsorption heat exchanger (52) serves as an evaporator. When high-pressure refrigerant is discharged from the compressor (53), a part of the refrigerant flows into the heat exchange bypass line (67). Such refrigerant passes through the heat exchange bypass line (67), and flows into the one-way path (119). Subsequently, the refrigerant flows into the auxiliary heat exchanger (61) of the one-way path (119). In the auxiliary heat exchanger (61), heat is exchanged between refrigerant before condensation (i.e., heat dissipation), which is bypassed from the first adsorption heat exchanger (51) serving as the condenser, and low-temperature outdoor air (second air). The refrigerant passing through the auxiliary heat exchanger (61) circulates through the refrigerant circuit (50), and is expanded by the main electric-operated expansion valve (55). Then, the refrigerant is evaporated in the second adsorption heat exchanger (52).

In the refrigerant circuit (50) which is in a second process, the controller (100) opens the auxiliary solenoid valve (68). In addition, the four-way switching valve (54) is set to the second state (state indicated by a dashed line in FIG. 18). The first adsorption heat exchanger (51) serves as the evaporator, and the second adsorption heat exchanger (52) serves as the condenser. When high-pressure refrigerant is discharged from the compressor (53), a part of the refrigerant flows into the heat exchange bypass line (67). Such refrigerant passes through the heat exchange bypass line (67), and flows into the one-way path (119). Subsequently, the refrigerant flows into the auxiliary heat exchanger (61) of the one-way path (119). In the auxiliary heat exchanger (61), heat is exchanged between refrigerant before the condensation (i.e., heat dissipation), which is bypassed from the second adsorption heat exchanger (52) serving as the condenser, and low-temperature outdoor air (second air). The refrigerant passing through the auxiliary heat exchanger (61) circulates through the refrigerant circuit (50), and is expanded by the main electric-operated expansion valve (55). Then, the refrigerant is evaporated in the first adsorption heat exchanger (51).

According to the seventh embodiment, the heat exchange bypass line (67) is provided, which connects an upstream side of the auxiliary heat exchanger (61) of the one-way path (119) of the bridge circuit (110) to the discharge side of the compressor (53). Refrigerant circulating through the refrigerant circuit (50) branches to the main circuit (50a) and the heat exchange bypass line (67). Thus, the refrigerant circulation in the refrigerant circuit (50) can be branched to the heat exchange bypass line (67). That is, high-pressure refrigerant discharged from the compressor (53) flows into the auxiliary heat exchanger (61) without dissipating heat in the adsorption heat exchanger (51, 52). This improves heating performance of the second air to be supplied to the adsorption heat exchanger (51, 52). Other configurations, features, and advantages are similar to those of the first embodiment.

### <Eighth Embodiment of the Invention>

As illustrated in FIG. 19, a humidity control apparatus (10) of an eighth embodiment includes a second electric-operated expansion valve (55b) instead of the auxiliary circuit (60) of the refrigerant circuit (50) of the humidity control apparatus (10) of the first embodiment.

Specifically, in the humidity control apparatus (10) of the eighth embodiment, an outdoor air path (34) communicates with an outdoor space through a duct and an auxiliary heat exchanger (61) which are connected to the outdoor air suction port (24). That is, outdoor air passing through the duct and discharged through the outdoor air suction port (24) necessarily passes through the auxiliary heat exchanger (61), and flows into the outdoor air path (34).

A refrigerant circuit (50) of the eighth embodiment is a closed circuit including a first adsorption heat exchanger (51), a second adsorption heat exchanger (52), a compressor (53), a four-way switching valve (54), a main electric-operated expansion valve (55), and an auxiliary heat exchanger (61).

The auxiliary heat exchanger (61) is connected between the first adsorption heat exchanger (51) and the second adsorption heat exchanger (52) in the refrigerant circuit (50), and exchanges heat between refrigerant flowing through the refrigerant circuit (50) and outdoor air.

The main electric-operated expansion valve (55) includes a first electric-operated expansion valve (55a) and the second electric-operated expansion valve (55b), and serves as a refrigerant adjusting mechanism.

The first electric-operated expansion valve (55a) serves as a first expansion mechanism configured to expand refrigerant circulating through the refrigerant circuit (50) and flowing out from the first adsorption heat exchanger (51) and the auxiliary heat exchanger (61). The first electric-operated expansion valve (55a) is connected between the second adsorption heat exchanger (52) and the auxiliary heat exchanger (61).

The second electric-operated expansion valve (55b) serves as a second expansion mechanism configured to expand refrigerant circulating through the refrigerant circuit (50) and flowing out from the second adsorption heat exchanger (52) and the auxiliary heat exchanger (61). The second electric-operated expansion valve (55b) is connected between the first adsorption heat exchanger (51) and the auxiliary heat exchanger (61). The first electric-operated expansion valve (55a), the auxiliary heat exchanger (61), and the second electric-operated expansion valve (55b) are connected together in series in this order.

A preheating process of a humidification operation of the eighth embodiment under low external temperature environment (e.g., lower than or equal to 5°C below zero) during winter will be described. First, in the refrigerant circuit (50) which is in a first process, when an outdoor air temperature sensor (99) detects that an outdoor air temperature is lower than or equal to 5°C below zero, a controller (100) fully opens the second electric-operated expansion valve (55b), and opens the first electric-operated expansion valve (55a). In addition, the four-way switching valve (54) is set to a first state (state indicated by a solid line in FIG. 19). The first adsorption heat exchanger (51) serves as a condenser, whereas the second adsorption heat exchanger (52) serves as an evaporator. When high-pressure refrigerant is discharged from the compressor (53), the refrigerant is condensed in the first adsorption heat exchanger (51), and then passes through the second electric-operated expansion valve (55b). Subsequently, the refrigerant flows into the auxiliary heat exchanger (61). At this point, the second electric-operated expansion valve (55b) is fully opened, and therefore the refrigerant passing through the second electric-operated expansion valve (55b) is not expanded. In the auxiliary heat exchanger (61), heat is exchanged between the refrigerant and low-temperature outdoor air (second air). The refrigerant passing through the auxiliary heat exchanger (61) is expanded by the first electric-operated expansion valve (55a), and is evaporated in the second adsorption heat exchanger (52).

In the refrigerant circuit (50) which is in a second process, the controller (100) fully opens the first electric-operated expansion valve (55a), and opens the second electric-operated expansion valve (55b). In addition, the four-way switching valve (54) is set to a second state (state indicated by a dashed line in FIG. 19). The first adsorption heat exchanger (51) serves as the evaporator, whereas the second adsorption heat exchanger (52) serves as the condenser. When high-pressure refrigerant is discharged from the compressor (53), the refrigerant is condensed in the second adsorption heat exchanger (52), and then passes through the first electric-operated expansion valve (55a). Subsequently, the refrigerant flows into the auxiliary heat exchanger (61). At this point, the first electric-operated expansion valve (55a) is fully opened, and therefore the refrigerant passing through the first electric-operated expansion valve (55a) is not expanded. In the auxiliary heat exchanger (61), heat is exchanged between the refrigerant and low-temperature outdoor air (second air). The refrigerant passing through the auxiliary heat exchanger (61) is expanded by the second electric-operated expansion valve (55b), and is evaporated in the first adsorption heat exchanger (51).

According to the eighth embodiment, the first electric-operated expansion valve (55a), the auxiliary heat exchanger (61), and the second electric-operated expansion valve (55b) are connected together in series. Thus, even if refrigerant circulating through the refrigerant circuit (50) flows in any of forward and backward directions, high-pressure refrigerant can flow into the auxiliary heat exchanger (61), and an amount of refrigerant flowing into the auxiliary heat exchanger (61) can be adjusted. Other configurations, features, and advantages are similar to those of the first embodiment.

### <Other Embodiments>

In the first to eighth embodiments, the present invention may have the following configurations.

In the first to eighth embodiments, the preheating process is performed during the humidification operation under the low external temperature environment (e.g., lower than or equal to 5°C below zero). However, in the humidity control apparatus of the present invention, the preheating process may be performed under any external temperature environment, or may be performed during the dehumidification operation.

The foregoing embodiments have been set forth merely for purposes of preferred examples in nature, and are not intended to limit the scope, applications, and use of the invention.

### INDUSTRIAL APPLICABILITY

As described above, the present invention is useful for the preheating process of the humidity control apparatus.

### DESCRIPTION OF REFERENCE CHARACTERS

- 50: Refrigerant Circuit
- 50a: Main Circuit
- 51: First Adsorption Heat Exchanger
- 52: Second Adsorption Heat Exchanger
- 53: Compressor
- 55: Main Electric-Operated Expansion Valve
- 60: Auxiliary Circuit
- 61: Auxiliary Heat Exchanger
- 62: Switching Solenoid Valve
- 64: Expansion Bypass Line
- 110: Bridge Circuit
- 111-114: First - Fourth Pipes
- 115-118: First - Fourth Check Valves
- 119: One-Way Path

## Claims

1. A humidity control apparatus which includes a refrigerant circuit (50) having a compressor (53), a main expansion mechanism (55), and a first adsorption heat exchanger (51) and a second adsorption heat exchanger (52) on which adsorbent for adsorbing moisture in air is supported and in which refrigerant reversibly circulates to perform a vapor compression refrigeration cycle, and is configured so that refrigerant circulation in the refrigerant circuit (50) is reversibly switched to alternately perform an adsorption process and a recovery process with the adsorbent in the adsorption heat exchangers (51, 52), and the humidity of air passing through the adsorption heat exchanger (51, 52) is adjusted, the humidity control apparatus, comprising:
an auxiliary heat exchanger (61) configured to preheat recovery air to be supplied to the adsorption heat exchanger (51, 52), which is provided in the refrigerant circuit (50), and is arranged on an upstream side of the adsorption heat exchanger (51, 52) in a recovery air flow; and
a refrigerant adjusting mechanism (62) configured to adjust an amount of refrigerant flowing into the auxiliary heat exchanger (61), which is provided in the refrigerant circuit (50).

2. The humidity control apparatus of claim 1, wherein
the refrigerant circuit (50) includes a main circuit (50a) having the compressor (53), the main expansion mechanism (55), and the adsorption heat exchangers (51, 52), and an auxiliary circuit (60) which is connected to the main circuit (50a), and into which high-pressure refrigerant flows,
the auxiliary heat exchanger (61) is provided in the auxiliary circuit (60), and
the refrigerant adjusting mechanism (62) is switchable between a state in which an inflow of high-pressure refrigerant into the auxiliary circuit (60) is allowed, and a state in which the inflow of high-pressure refrigerant into the auxiliary circuit (60) is blocked.

3. The humidity control apparatus of claim 2, wherein
the auxiliary circuit (60) includes an expansion bypass line (64) configured to bypass the main expansion mechanism (55) of the main circuit (50a), and
an auxiliary expansion mechanism (66) provided on a downstream side of the auxiliary heat exchanger (61) of the expansion bypass line (64) serves as the refrigerant adjusting mechanism (62).

4. The humidity control apparatus of claim 3, further comprising:
a bridge circuit (110) configured so that refrigerant constantly flows in one direction, and provided in a liquid line (50b) of the main circuit (50a),
wherein the main expansion mechanism (55) is arranged in a one-way path (119) connecting between one middle point and the other middle point in the bridge circuit (110), and
both ends of the expansion bypass line (64) are connected to the one-way path (119) of the bridge circuit (110) so as to bypass the main expansion mechanism (55).

5. The humidity control apparatus of claim 4, wherein
pipes (111-114) including check valves (115-118) are connected together to form the bridge circuit (110), and
the main circuit (50a) includes an auxiliary line (58) which connects an upstream side of the main expansion mechanism (55) of the one-way path (119) to the liquid line (50b) between the bridge circuit (110) and one of the adsorption heat exchangers (51, 52), and which has a capillary tube (59).

6. The humidity control apparatus of claim 3, wherein
the expansion bypass line (64) includes the bridge circuit (110) in which refrigerant constantly flows in one direction,
the auxiliary heat exchanger (61) is arranged in the one-way path (119) connecting between the one middle point and the other middle point in the bridge circuit (110), and
the auxiliary expansion valve (66) is arranged on the downstream side of the auxiliary heat exchanger (61) in the one-way path (119).

7. The humidity control apparatus of claim 2, wherein
the both ends of the auxiliary circuit (60) are connected to a high-pressure line (50c) on a discharge side of the compressor (53), and
the refrigerant adjusting mechanism (62) is switchable between a state in which refrigerant discharged from the compressor (53) flows through the high-pressure line (50c) of the main circuit (50a) and a state in which the refrigerant flows through the auxiliary circuit (60).

8. The humidity control apparatus of claim 2, wherein
the auxiliary circuit (60) includes a first auxiliary circuit (60a) and a second auxiliary circuit (60b), each of which is connected to the liquid line (50b) between an associated one of the adsorption heat exchangers (51, 52) and the main expansion mechanism (55) in the main circuit (50a) at both ends,
the auxiliary heat exchanger (61) includes a first auxiliary heat exchanger (61a) provided in the first auxiliary circuit (60a), and a second auxiliary heat exchanger (61b) provided in the second auxiliary circuit (60b), and
the refrigerant adjusting mechanism (62) is switchable between a state in which liquid refrigerant flows through the liquid line (50b) of the main circuit (50a) and a state in which the liquid refrigerant flows through the first auxiliary circuit (60a) or the second auxiliary circuit (60b).

9. The humidity control apparatus of claim 2, further comprising:
the bridge circuit (110) configured so that refrigerant constantly flows in one direction, and provided in the liquid line (50b) of the main circuit (50a),
wherein the main expansion mechanism (55) is arranged in the one-way path (119) connecting between the one middle point and the other middle point in the bridge circuit (110),
the both ends of the auxiliary circuit (60) are connected to the upstream side of the main expansion mechanism (55) in the one-way path (119) of the bridge circuit (110), and
the refrigerant adjusting mechanism (62) is switchable between a state in which liquid refrigerant flows through the main circuit (50a) of the one-way path (119) of the bridge circuit (110), and a state in which the liquid refrigerant flows through the auxiliary circuit (60).

10. The humidity control apparatus of claim 9, wherein
a noise canceling unit (65) is provided on an upstream side of the auxiliary heat exchanger (61) in the auxiliary circuit (60).

11. The humidity control apparatus of claim 1, wherein
the main expansion mechanism (55) includes a first expansion mechanism (55a) and a second expansion mechanism (55b), and the first expansion mechanism (55a), the auxiliary heat exchanger (61), and the second expansion mechanism (55b) are connected together in series in this order, and
the first expansion mechanism (55a) or the second expansion mechanism (55b) positioned between the adsorption heat exchanger (51, 52) performing the recovery process, and the auxiliary heat exchanger (61) serves as the refrigerant adjusting mechanism (62).

12. The humidity control apparatus of claim 1, further comprising:
the bridge circuit (110) configured so that refrigerant constantly flows in one direction, and provided in the liquid line (50b) of the main circuit (50a),
wherein the main expansion mechanism (55) is arranged in the one-way path (119) connecting between the one middle point and the other middle point in the bridge circuit (110),
the auxiliary heat exchanger (61) is provided on the upstream side of the main expansion mechanism (55) of the one-way path (119) of the bridge circuit (110), and
the refrigerant adjusting mechanism (62) includes a heat exchange bypass line (67), one end of which is connected to the discharge side of the compressor (53), and the other end of which is connected to the upstream side of the auxiliary heat exchanger (61) of the one-way path (119) of the bridge circuit (110), and a switching unit (68) configured to switch between a state in which refrigerant discharged from the compressor (53) flows through the heat exchange bypass line (67) and a state in which circulation of the refrigerant through the heat exchange bypass line (67) is blocked.
